# EUROPÄISCHE PATENTSCHRIFT

(11) **EP 3 214 120 B1**
(45) Veröffentlichungstag und Bekanntmachung des Hinweises auf die Patenterteilung: **01.05.2019**
(21) Anmeldenummer: 17158649.8
(22) Anmeldetag: 01.03.2017
(51) Int. Cl.: C08L 7/00, C08L 9/00, C08L 9/06, C08L 11/00, C08L 21/00, C08L 23/12, C08L 23/16, C08L 23/22, B29B 7/48, B29K 23/00, C08F 255/02, C08L 9/02, C08L 23/08, C08L 31/04

(54) **THERMOPLASTISCHE ELASTOMERZUSAMMENSETZUNG AUS EINEM ELASTOMER UND EINEM NICHT-ELASTOMEREN POLYOLEFIN, DAS MIT EINEM ANHYDRID EINER ORGANISCHEN CARBONSÄURE FUNKTIONALISIERT IST**
THERMOPLASTIC ELASTOMER COMPOSITION OF AN ELASTOMER AND A NON-ELASTOMER POLYOLEFIN, FUNCTIONALISED WITH AN ANHYDRIDE OF AN ORGANIC CARBOXYLIC ACID
COMPOSITION ÉLASTOMÈRE THERMOPLASTIQUE À PARTIR D'UN ÉLASTOMÈRE ET D'UN POLYOLÉFINE NON-ÉLASTOMÈRE FONCTIONNALISÉ AVEC UN ANHYDRIDE D'UN ACIDE CARBOXYLIQUE ORGANIQUE

(30) Priorität: 03.03.2016 DE 102016103823
(43) Veröffentlichungstag der Anmeldung: 06.09.2017
(73) Patentinhaber: Kraiburg TPE GmbH & Co. KG, 84478 Waldkraiburg (DE)
(72) Erfinder: Vielsack, Frieder, 84478 Waldkraiburg (DE)
(74) Vertreter: Eder Schieschke & Partner mbB

(56) Entgegenhaltungen:
- EP-A1- 1 882 721
- EP-A2- 0 481 789
- CN-A- 104 829 940
- CN-B- 101 948 599
- US-A- 4 298 712
- US-A- 4 409 365
- US-A- 4 452 942
- US-A- 4 728 692
- US-A- 6 028 142
- US-A1- 2015 252 179

## Beschreibung

Die vorliegende Erfindung betrifft eine thermoplastische Elastomerzusammensetzung aus einem Elastomer und einem nicht-elastomeren Polyolefin, das mit einem Anhydrid einer organischen Carbonsäure funktionalisiert ist. Weiterhin betrifft die vorliegende Erfindung auch die Verwendung einer Mischung aus einem Elastomer und einem Vernetzungsmittel für das Elastomer zur Herstellung einer erfindungsgemäßen thermoplastischen Elastomerzusammensetzung. Ein weiterer Gegenstand der vorliegenden Erfindung ist die Verwendung eines nicht-elastomeren Polyolefins, das mit einem Anhydrid einer organischen Carbonsäure funktionalisiert ist, zur Herstellung einer erfindungsgemäßen thermoplastischen Elastomerzusammensetzung. Zudem betrifft die vorliegende Erfindung die Verwendung einer erfindungsgemäßen thermoplastischen Elastomerzusammensetzung zur Herstellung eines Verbundmaterials mit einem Polyamid. Die vorliegende Erfindung betrifft auch ein Verfahren zur Herstellung einer erfindungsgemäßen thermoplastischen Elastomerzusammensetzung sowie einen Artikel aus der erfindungsgemäßen thermoplastischen Elastomerzusammensetzung mit einem Polyamid.

Im Stand der Technik sind nur thermoplastische Elastomerzusammensetzungen, wie beispielsweise THERMOLAST® K, THERMOLAST® V, THERMOLAST® A und HIPEX® der Fa. Kraiburg TPE GmbH & Co. KG, bekannt, die entweder eine gute Haftung zu Thermoplasten, wie Polyamiden, oder eine gute chemische Beständigkeit aufweisen. Es sind keine thermoplastischen Elastomerzusammensetzungen bekannt, die sowohl eine gute Haftung zu Polyamiden als auch eine gute chemische Beständigkeit aufweisen. Letzteres trifft insbesondere im meist geforderten Shore-A-Härtebereich von 30 bis 90 zu. Unter "chemische Beständigkeit" soll erfindungsgemäß vorzugsweise eine Beständigkeit gegenüber Betriebsstoffen von Fahrzeugen, wie Motorenölen, Getriebeölen, Kraftstoffen, wie Benzin und Diesel, sowie anderen Betriebsstoffen wie AdBlue® oder Kühlmitteln, verstanden werden.

Somit besteht insbesondere im Bereich Automotive sowie deren kunststoffverarbeitende Zuliefer-Industrie der Bedarf an thermoplastischen Elastomerzusammensetzungen, die eine gute Haftung zu Polyamiden, als auch eine gute chemische Beständigkeit aufweisen.

Die US 4,728,692 A betrifft eine thermoplastische Elastomerzusammensetzung unter Verwendung von halogeniertem Butylkautschuk als elastomere Komponente.

Die US 4,298,712 A betrifft eine modifizierte Polyolefinmischung mit verbesserter Haftung auf zahlreichen Substraten. Hier werden keine vernetzten Elastomere verwendet.

Die US 4,452,942 A betrifft thermoplastische Zusammensetzungen mit Haftung auf zahlreichen Substraten.

Die US 4,409,365 A betrifft eine elastoplastische Zusammensetzung, die eine Mischung aus (a) einer elastoplastischen Zusammensetzung aus kristallinem Polyolefinharz und vulkanisiertem Monoolefinkautschuk und (b) einer elastoplastischen Zusammensetzung aus einem kristallinen Polyolefinharz und einem vulkanisierten Nitrilkautschuk umfasst.

Die CN 101 948 599 B betrifft ein Verfahren zur Herstellung eines thermoplastischen Elastomers, das aus Ethylenvinylacetatkautschuk, Homopolypropylen or Copolypropylen, Polypropylen gepfropftem Maleinsäureanhydrid, Peroxid und ungesättigtem Carboxylat durch dynamische Vulkanisation hergestellt wird.

Die US 6,028,142 A betrifft ein vernetztes Elastomer mit thermoplastischen Eigenschaften sowie dessen Herstellung. Das Elastomer umfasst ein Polyocten und ein gepfropftes Polyolefin.

Die EP 0 481 789 A2 betrifft eine olefinische Harzzusammensetzung, die (a) ein olefinisches thermoplastisches Elastomer mit einem Polyolefinharz und einem olefinischen Copolymerkautschuk, (b) ein mit Maleinsäureanhyrid mofiziertes Polypropylen mit niedrigem Molekulargewicht und (c) einen klebrigmachenden Stoff für Kautschuk enthält.

Die EP 1 882 721 A1 betrifft thermoplastische Flammschutz-Harzzusammensetzungen, die für die Ummantelung von elektrischen Drähten verwendet werden.

Die CN 104 829 940 A betrifft ein halogenfreies Flammschutz-Isolations-Material mit hoher Festigkeit, das Fluorsilikonöl, gebranntes Siliciumdioxid, Maleinsäureanhydrid-gepfropftes Polypropylen, ein Antioxidanz, ein Silankopplungsmittel, ein Polyethylenharz mit niedriger Dichte, Vinyltrimethoxysilan, Dicumylperoxid, Dibutylzinndilaurat, Magnesiumhydroxid, Ethylenvinylacetatcopolymer und ein Polyethylenharz mit hoher Dichte umfasst.

Die US 2015/252179 A1 betrifft ein Polyolefin/Naturfaserkomposit, das ein Polyolefinharz, eine Naturfaser, ein thermoplastisches Elastomer und einen Phaenvermittler auf Basis eines Maleinsäurereanhydrid-gepfropften Polypropylen umfasst.

Es war deshalb die Aufgabe der vorliegenden Erfindung, eine thermoplastische Elastomerzusammensetzung bereitzustellen, die sowohl eine gute Haftung zu Thermoplasten, wie Polyamiden, als auch eine gute chemische Beständigkeit aufweist. Zudem sollen die Härten der thermoplastischen Elastomerzusammensetzungen im Bereich von 30 bis 90 Shore A (ShA) liegen.

Die erfindungsgemäße Aufgabe wird durch die Bereitstellung einer thermoplastischen Elastomerzusammensetzung gelöst, die ein Elastomer, ein thermoplastisches Elastomer auf Polyolefin-Blockcopolymer-Basis (TPO), das mit einem Anhyhdrid einer organischen Carbonsäure funktionalisiert sein kann, und einen Thermoplast enthält, wobei der Thermoplast ein nicht-elastomeres Polyolefin ist, das mit einem Anhydrid einer organischen Carbonsäure funktionalisiert ist, und wobei das Elastomer ein Elastomer umfasst, das aus der Gruppe von Elastomeren ausgewählt ist, die aus Ethylen-Vinylacetat-Copolymer, Nitrilbutadien-Kautschuk, hydriertem Nitrilbutadien-Kautschuk, Butyl-Kautschuk, Naturkautschuk, Isopren-Kautschuk, Acrylat-Kautschuk, Ethylen-Acrylat-Kautschuk, Silikon-Kautschuk, Styrol-Butadien-Kautschuk, Chloropren-Kautschuk, Epichlorhydrin-Kautschuk, epoxidiertem Naturkautschuk und einer Mischung aus zwei oder mehreren der genannten Elastomere besteht, wobei das Elastomer während oder nach dem Vermengen mit dem Termoplast vernetzt wird.

Gemäß der vorliegenden Anmeldung wird unter einem thermoplastisches Elastomer ein TPE verstanden, das aus einem Polymer oder einer Polymermischung (Blend) besteht und bei seiner Gebrauchstemperatur Eigenschaften aufweist, die denen von vulkanisiertem Kautschuk ähnlich sind, das jedoch bei erhöhten Temperaturen wie ein thermoplastischer Kunststoff verarbeitet und aufbereitet werden kann. Gleiches gilt auch für die erfindungsgemäßen thermoplastischen Elastomerzusammensetzungen.

Insbesondere betrifft die vorliegende Erfindung auch eine Ausführungsform, in der in der erfindungsgemäßen thermoplastischen Elastomerzusammensetzung das Elastomer ein Elastomer umfasst, das aus der Gruppe von Elastomeren ausgewählt ist, die aus Ethylen-Vinylacetat-Copolymer, Nitrilbutadien-Kautschuk, hydriertem Nitrilbutadien-Kautschuk, Butyl-Kautschuk, Naturkautschuk, Isopren-Kautschuk, Acrylat-Kautschuk, Ethylen-Acrylat-Kautschuk und einer Mischung aus zwei oder mehreren der genannten Elastomere besteht. Besonders bevorzugt ist es, dass das Elastomer ein Elastomer umfasst, das aus der Gruppe von Elastomeren ausgewählt ist, die aus Ethylen-Vinylacetat-Copolymer, Nitrilbutadien-Kautschuk und einer Mischung aus beiden Elastomeren besteht.

Weiterhin bevorzugt ist es, dass das Elastomer in der erfindungsgemäßen Zusammensetzung aus einem oder mehreren der genannten Elastomere besteht.

In einer Ausführungsform der vorliegenden Erfindung ist es bevorzugt, dass die erfindungsgemäße thermoplastische Elastomerzusammensetzung zusätzlich ein Vernetzungsmittel aufweist. Als Vernetzungsmittel in der erfindungsgemäßen thermoplastischen Elastomerzusammensetzung können die weiter unten angeführten Vernetzungsmittel - je nach verwendetem Elastomer - verwendet werden.

In einer weiteren Ausführungsform der vorliegenden Erfindung ist es bevorzugt, dass in der erfindungsgemäßen thermoplastischen Elastomerzusammensetzung die Funktionalisierung des nicht-elastomeren Polyolefins mit einem Anhydrid einer organischen Carbonsäure durch eine organische Dicarbonsäure, vorzugsweise eine organische 1,2-Dicarbonsäure, erfolgt. Besonders bevorzugt erfolgt die Funktionalisierung des nicht-elastomeren Polyolefins durch ein substituiertes oder unsubstituiertes Bernsteinsäureanhydrid.

Das Anhydrid einer organischen Carbonsäure ist vorzugsweise über eine kovalente Bindung an das nicht-elastomere Polyolefin gebunden und wird durch Pfropfung hergestellt. Dazu wird ein Anhydrid einer organischen Carbonsäure auf ein geeignetes nicht-elastomeres Polyolefin "aufgepfropft" (Grafting-Prozess). Hierfür wird vorzugsweise ein Anhydrid einer organischen Säure verwendet, das eine reaktive Doppelbindung aufweist, beispielsweise Maleinsäureanhydrid. Weitere Details über das Polyolefin, das mit einem Anhydrid einer organischen Carbonsäure funktionalisiert ist, sowie zur Herstellung durch Pfropfung sind weiter unten beschrieben.

In einer weiteren Ausführungsform der vorliegenden Erfindung ist das nicht-elastomere Polyolefin in der erfindungsgemäßen thermoplastischen Zusammensetzung vorzugsweise ein Polypropylen. Ganz besonders bevorzugt ist das nicht-elastomere Polyolefin, das mit einem Anhydrid einer organischen Carbonsäure funktionalisiert ist, ein mit Maleinsäureanhydrid gegraftetes/gepfropftes Polypropylen (g-MAH-PP). Bei der Pfropfung wird aus der Doppelbindung im Ring des Maleinsäureanhydrids eine Einfachbindung, so dass der am Polymer gebundene Rest ein Bernsteinsäureanhydridrest ist.

Das erfindungsgemäß eingesetzte TPO ist vorzugsweise ein Blockcopolymer, das mindestens zwei verschiedene Alkylen-Einheiten umfasst bzw. daraus besteht. Unter Alkylen-Einheiten versteht man die Wiederholungseinheiten des Polymers, aus denen das Polymer durch Polymerisation gebildet wird. Besonders bevorzugt ist es hierbei, dass das Blockcopolymer Ethylen- und Propylen-Einheiten aufweist bzw. aus diesen Einheiten besteht. Das Gewichtsverhältnis von Elastomer zu TPO liegt in der erfindungsgemäßen Zusammensetzung vorzugsweise im Bereich von 100:5 bis 100:45, stärker bevorzugt im Bereich von 100:10 bis 100:30.

Das in der erfindungsgemäßen thermoplastischen Elastomerzusammensetzung enthaltene TPO kann mit einem Anhydrid einer organischen Carbonsäure funktionalisiert sein (auch funktionalisiertes TPO genannt). Vorzugsweise ist die funktionale Gruppe ein substituiertes oder unsubstituiertes Bernsteinsäureanhydrid. Bevorzugt wird das funktionalisierte TPO mittels Pfropfung (Grafting-Prozess) hergestellt und wird als grafted TPO (kurz: g-TPO) bezeichnet. Auch hier wird - wie bei dem nicht-elastomeren Polyolefin, das mit einem Anhydrid einer organischen Carbonsäure funktionalisiert ist - ein weiteres Molekül (oder mehrere Moleküle) an ein TPO, vorzugsweise ein TPO wie es zuvor beschrieben ist, aufgepfropft. Erfindungsgemäß geeignete TPOs und g-TPOs sind weiter unten beschrieben.

In der erfindungsgemäßen thermoplastischen Elastomerzusammensetzung liegt das Gewichtsverhältnis von Elastomer zu Thermoplast vorzugsweise im Bereich von 100:15 bis 100:60, stärker bevorzugt im Bereich von 100:20 bis 100:50.

Als Vernetzungsmittel in der erfindungsgemäßen thermoplastischen Elastomerzusammensetzung können die weiter unten angeführten Vernetzungsmittel - je nach verwendetem Elastomer - verwendet werden.

Die thermoplastische Elastomerzusammensetzung kann zudem zusätzlich einen Weichmacher enthalten. Entsprechende Weichmacher, die erfindungsgemäß eingesetzt werden können, sind ebenso weiter unten beschrieben. Hierbei wird der Weichmacher vorzugsweise in einem Gewichtsverhältnis Elastomer zu Weichmacher im Bereich von 100:40 bis 100:15, stärker bevorzugt in einem Bereich von 100:30 bis 100:20 eingesetzt.

Weiterhin kann die erfindungsgemäße thermoplastische Elastomerzusammensetzung auch weitere Additive, wie einen Stabilisator, einen Hilfsstoff, einen Farbstoff, einen Füllstoff und/oder einen Verträglichkeitsvermittler enthalten. Diese sind ebenso weiter unten genauer beschrieben.

Ein Stabilisator, Hilfsstoff und/oder Farbstoff wird vorzugsweise jeweils in einem Gewichtsverhältnis Elastomer zu den genannten eingesetzten Stoffen in einem Bereich von 100:4 bis 100:0,01 und stärker bevorzugt in einem Bereich von 100:0,05 bis 100:1 eingesetzt. Ein Füllstoff wird vorzugsweise in einem Gewichtsverhältnis Elastomer zu Füllstoff in einem Bereich von 100:100 bis 100:1 eingesetzt.

Zusätzlich zu dem Vernetzungsmittel kann die erfindungsgemäße thermoplastische Elastomerzusammensetzung auch einen Covernetzer enthalten. Erfindungsgemäß einsetzbare Covernetzer sind ebenfalls weiter unten beschrieben.

Die vorliegende Erfindung betrifft auch die Verwendung einer Mischung aus einem Elastomer und einem Vernetzungsmittel für das Elastomer zur Herstellung einer erfindungsgemäßen thermoplastischen Elastomerzusammensetzung, worin das Elastomer aus der gleichen Gruppe von Elastomeren ausgewählt wird, die weiter oben in Verbindung mit der erfindungsgemäßen thermoplastischen Elastomerzusammensetzung genannt sind. Die dabei bevorzugt erwähnten Elastomere sind auch in der erfindungsgemäßen Verwendung bevorzugt. Das Gewichtsverhältnis von Elastomer zu Vernetzungsmittel liegt vorzugsweise ebenso in dem für die erfindungsgemäße thermoplastische Elastomerzusammensetzung angegebenen Bereich.

Die erfindungsgemäße Verwendung der Mischung aus einem Elastomer und einem Vernetzungsmittel für das Elastomer kann zusätzlich einen Covernetzer, einen Weichmacher oder ein weiteres Additiv enthalten. Die auch weiter oben in Verbindung mit der erfindungsgemäßen thermoplastischen Elastomerzusammensetzung genannten Covernetzer, Weichmacher oder weiteren Additive werden auch hier vorzugsweise eingesetzt. Die in Verbindung mit der erfindungsgemäßen thermoplastischen Elastomerzusammensetzung angegebenen Gewichtsverhältnisse sind auch hier bevorzugt.

Die vorliegende Erfindung betrifft weiterhin die Verwendung eines nicht-elastomeren Polyolefins, das mit einem Anhydrid einer organischen Carbonsäure funktionalisiert ist, zur Herstellung einer erfindungsgemäßen Elastomerzusammensetzung. Weiterhin kann bei der erfindungsgemäßen Verwendung dem nicht-elastomeren Polyolefin ein thermoplastisches Elastomer auf Polyolefin-Blockcoplymer-Basis (TPO) beigemischt sein. Weiterhin kann bei der erfindungsgemäßen Verwendung dem nicht-elastomeren Polyolefin ein g-TPO beigemischt sein. TPO, g-TPO sowie nicht-elastomere Polyolefine, die mit einem Anhydrid einer organischen Säure funktionalisiert sind, sind weiter unten beschrieben.

Die vorliegende Erfindung betrifft auch die Verwendung einer erfindungsgemäßen thermoplastischen Elastomerzusammensetzung zur Herstellung eines Artikels mit einem Polyamid beziehungsweise zur Haftung der erfindungsgemäßen thermoplastischen Elastomerzusammensetzung auf einem Polyamid. In anderen Worten betrifft die vorliegende Erfindung auch ein Verfahren zur Herstellung eines Artikels, z.B. in Form eines Verbundmaterials, aus der erfindungsgemäßen thermoplastischen Elastomerzusammensetzung und einem Polyamid, wobei die thermoplastische Elastomerzusammensetzung mit einem Polyamid verbunden wird. Dabei wird bei der erfindungsgemäßen Verwendung bzw. dem erfindungsgemäßen Verfahren als Verarbeitungsmethode zur Herstellung der Artikel Spritzguss, Mehrkomponenten-Spritzguss, Spritzguss-Einlegeverfahren, Extrusion oder Formpressverfahren verwendet, wobei Spritzguss, Mehrkomponenten-Spritzguss, Spritzguss-Einlegeverfahren und Extrusion bevorzugt und Mehrkomponenten-Spritzguss ganz besonders bevorzugt ist.

Somit betrifft die vorliegende Erfindung auch einen Artikel, z.B. in der Form eines Verbundmaterials, aus einer erfindungsgemäßen thermoplastischen Elastomerzusammensetzung und einem Polyamid.

Unter einem Polyamid wird erfindungsgemäß ein lineares Polymer verstanden, das sich regelmäßig wiederholende Amidbindungen entlang der Hauptkette des Polymers aufweist. Beispiele hierfür sind Polycaprolactam (PA6), Poly-(N,N'-hexamethylenadipindiamid) (PA6.6), Poly-(hexamethylensebacamid) (PA6.10), Polyundecanolactam (PA11) und Polylauryllactam (PA12).

Die vorliegende Erfindung betrifft auch die Verwendung einer erfindungsgemäßen thermoplastischen Elastomerzusammensetzung zur Herstellung von Bauteilen oder Formkörpern im Automobilinnenbereich sowie unter der Motorhaube ("under the hood"), d.h. im Motorraum von Fahrzeugen, zur Herstellung von Industriegeräten, Industriewerkzeugen, Badarmaturen, Haushaltsgeräten, Geräten der Unterhaltungselektronik, Sportartikeln, medizinischen Verbrauchsartikeln und Geräten, Behältern für Hygieneartikel und Kosmetika und allgemein Dichtungsmaterialien.

Weiterhin betrifft die vorliegende Erfindung auch ein Verfahren zur Herstellung einer erfindungsgemäßen thermoplastischen Elastomerzusammensetzung, worin ein Elastomer mit einem thermoplastischen Elastomer auf Polyolefin-Blockcopolymer-Basis (TPO), das mit einem Anhyhdrid einer organischen Carbonsäure funktionalisiert sein kann, und einem Thermoplasten vermischt wird, wobei das Elastomer aus der Gruppe von Elastomeren ausgewählt ist, die weiter oben in Verbindung mit der erfindungsgemäßen thermoplastischen Elastomerzusammensetzung angegeben sind, und wobei der Thermoplast einer ist, wie er weiter in Verbindung mit der erfindungsgemäßen thermoplastischen Elastomerzusammensetzung angegeben ist, wobei das Elastomer während oder nach dem Vermengen mit dem Thermoplast vernetzt wird. Die dabei angegebenen bevorzugten Elastomere und Thermoplasten sind auch hier bevorzugt. Die angegebenen Gewichtsverhältnisse in der erfindungsgemäßen thermoplastischen Elastomerzusammensetzung sind auch die Verhältnisse, in denen die Komponenten in dem erfindungsgemäßen Verfahren eingesetzt werden. Bevorzugte Verfahrensdetails sind weiter unten beschrieben.

Die zuvor genannten und in den erfindungsgemäßen thermoplastischen Elastomerzusammensetzungen bzw. bei den erfindungsgemäßen Verwendungen und Verfahren eingesetzten Komponenten werden im Weiteren genauer beschrieben:

| | |
|---|---|
| A: | Elastomer |
| B: | nicht-elastomeres Polyolefin, das mit einem Anhydrid einer organischen Carbonsäure funktionalisiert ist |
| C: | thermoplastisches Elastomer auf Polyolefin-Blockcoplymer-Basis (TPO) und/oder funktionalisiertes g-TPO |
| D: | Vernetzungsmittel |
| E: | Covernetzer |
| F: | Weichmacher |
| G: | Stabilisator, Hilfsstoff, Farbstoff |
| H: | Füllstoff |

### Komponente A: Elastomer

Unter dem Begriff "Elastomer" wird nicht nur ein einzelnes Elastomer verstanden, sondern auch eine Mischung aus zwei oder mehreren Elastomeren. In allen erfindungsgemäßen Ausführungsformen enthält das Elastomer ein Elastomer (bzw. besteht daraus), das aus der Gruppe von Elastomeren ausgewählt ist, die aus Ethylen-Vinylacetat-Copolymer, Nitrilbutadien-Kautschuk, hydriertem Nitrilbutadien-Kautschuk, Butyl-Kautschuk, Naturkautschuk, Isopren-Kautschuk, Acrylat-Kautschuk, Ethylen-Acrylat-Kautschuk, Silikon-Kautschuk, Styrol-Butadien-Kautschuk, Chloropren-Kautschuk, Epichlorhydrin-Kautschuk, epoxidiertem Naturkautschuk oder einer Mischung der genannten Elastomere besteht. Als Elastomer kann ein einzelnes der genannten Elastomere, aber auch eine Kombination von zwei oder mehr der genannten Elastomere eingesetzt werden. Die Elastomere liegen in der erfindungsgemäßen thermoplastischen Elastomerzusammensetzung vernetzt vor. Beschreibungen der einzelnen Elastomerklassen sowie im Handel erhältliche Produkte finden sich beispielsweise in Kapitel 7.1. von "K. Oberbach, Kunststoff Taschenbuch, Carl Hanser Verlag München Wien, 26. Ausgabe (1995)".

Ethylen-Vinylacetat-Copolymere (EVM) sind Copolymerisate aus Ethylen und Vinylacetat. EVM sind zum Beispiel unter den Handelsnamen Levapren® oder Levamelt® der Lanxess Deutschland GmbH kommerziell erhältlich. Erfindungsgemäß bevorzugt eingesetzte Ethylen-Vinylacetat-Copolymere sind Levamelt® 400 (40 ± 1,5 Gew.-% Vinylacetat), Levamelt® 450 (45 ± 1,5 Gew.-% Vinylacetat), Levamelt® 452 (45 ± 1,5 Gew.-% Vinylacetat), Levamelt® 456 (45 ± 1,5 Gew.-% Vinylacetat), Levamelt® 500 (50 ± 1,5 Gew.-% Vinylacetat), Levamelt® 600 (60 ± 1,5 Gew.-% Vinylacetat), Levamelt® 700 (70 ± 1,5 Gew.-% Vinylacetat), Levamelt® 800 (80 ± 2 Gew.-% Vinylacetat) und Levamelt® 900 (90 ± 2 Gew.-% Vinylacetat), beziehungsweise die entsprechenden Levapren®-Typen, wobei Levamelt® 600 besonders bevorzugt ist.

In den erfindungsgemäßen Zusammensetzungen kann als Komponente ein Ethylen-Vinylacetat-Copolymer eingesetzt werden, es ist jedoch ebenfalls möglich, Mischungen aus zwei oder mehr Ethylen-Vinylacetat-Copolymeren einzusetzen. Die Vernetzung bei EVM erfolgt peroxidisch.

Nitrilbutadien-Kautschuk (NBR) sind Copolymerisate aus Acrylnitril (ACN) und 1,3-Butadien. NBR lassen sich aufgrund ihrer enthaltenen Doppelbindungen sowohl peroxidisch als auch über Phenolharze oder Schwefel vernetzen. In den erfindungsgemäßen thermoplastischen Elastomerzusammensetzungen kommt vorzugsweise die peroxidische Vernetzung zum Einsatz. Beispiele für erfindungsgemäß einzusetzende NBR sind unter den Handelsnamen Perbunan®, Krynac®, Buna® N, oder Europrene® N bekannt und kommerziell erhältlich.

Hydrierter Nitrilbutadien-Kautschuk (H-NBR) wird durch Hydrierung der in NBR enthaltenen Doppelbindungen erhalten. H-NBR lässt sich peroxidisch vernetzen. Beispiele für erfindungsgemäß einzusetzende H-NBR sind unter den Handelsnamen Therban® (Lanxess) und Therban® AT (Lanxess) bekannt und kommerziell erhältlich.

Butyl-Kautschuk (IIR) wird auch Isobuten-Isopren-Kautschuk genannt. Aus der Gruppe der Elastomere zählt IIR zu den Synthesekautschuken. IIR ist ein Copolymerisat aus Isobuten und Isopren, wobei vorzugsweise Isobuten in einer Menge von 95 bis 99 Mol-% und Isopren in einer Menge von 1 bis 5 Mol-%, bezogen auf das gesamte Molgewicht, vorliegt. IR wird erfindungsgemäß vorzugsweise mithilfe von Peroxiden vernetzt.

Naturkautschuk (NR) ist ein Homopolymerisat des Isoprens, das fast ausschließlich 1,4-cis-Verknüpfung aufweist. Typischerweise liegt das mittlere Molgewicht Mw bei etwa 2*10⁶ g/mol. NR wird erfindungsgemäß vorzugsweise mithilfe von Peroxiden vernetzt.

Isopren-Kautschuk (IR) ist die synthetisch produzierte Variante des Naturkautschuks. Sie unterscheidet sich von diesem in erster Linie durch die etwas geringere chemische Reinheit. Dies liegt daran, dass die zur Polymerisation eingesetzten Katalysatoren eine geringere Effektivität besitzen als die in der Natur vorkommenden Enzyme. Die Reinheit von Naturkautschuk liegt vorzugsweise bei mehr als 99,9%, wohingegen sie bei den synthetisch hergestellten IR - je nach eingesetztem Katalysator - nur etwa 92% bis 97% erreicht. Wie der Naturkautschuk ist auch IR peroxidisch, phenolisch oder mit Schwefel vernetzbar. Vorzugsweise erfolgt die Vernetzung erfindungsgemäß mithilfe von Peroxiden.

Acrylat-Kautschuke (ACM) sind Copolymere aus AcrylsäureAlkylestern und einem weiteren vinylischen Polymer, wie beispielsweise ein Copolymer aus Acrylsäureester und 2-Chlorethylvinylether oder ein Copolymer aus Acrylsäureester und Acrylnitril. Die Art der Vernetzung solcher Polymere ist abhängig von den verwendeten Comonomeren.

Ethylen-Acrylat-Kautschuk (AEM) ist ein Copolymerisat aus Ethylen und Methylacrylat. Kommerziell erhältlich ist dieser beispielsweise als Vamac® von der Firma Du Pont.

Silikon-Kautschuke werden aus in den gummielastischen Zustand überführbare Massen hergestellt, die Poly(organo)siloxane enthalten und die für Vernetzungsreaktionen zugängliche Gruppen aufweisen. In anderen Worten sind Silikonkautschuke Poly(organo)siloxane, die mit einem Vernetzungsmittel vernetzt sind. Die Vernetzung kann über (organische) Peroxide erfolgen, sie kann jedoch auch dadurch zustande kommen, dass Si-H-Gruppen katalytisch an siliziumgebundene Vinylgruppen addiert werden, wobei beide Gruppen in die Polymerketten bzw. an deren Ende eingebaut sind.

Styrol-Butadien-Kautschuk (SBR) ist ein Copolymerisat aus Styrol und 1,3-Butadien, wobei erfindungsgemäß der Styrolgehalt unter 25% (im Verhältnis zum Butadiengehalt) liegen sollte, da bei höherem Syrolgehalt der Kautschuk thermoplastische Eigenschaften annimmt. SBR ist sowohl peroxidisch als auch durch Phenolharze sowie durch Schwefel vernetzbar. In den erfindungsgemäßen Zusammensetzungen kommt hier vorzugsweise die peroxidische Vernetzung zum Einsatz. Beispiele für erfindungsgemäß einzusetzende SBR sind unter den Handelsnamen Kralex® und Europrene® SBR bekannt und kommerziell erhältlich.

Chloropren-Kautschuk (CR) wird auch Polychloropren oder Chlorbutadien-Kautschuk genannt und ist ein Synthesekautschuk, der auch unter dem Markennamen Neopren bekannt ist. Neopren ist eine Marke des Unternehmens DuPont, der Handelsnamen der Fa. Lanxess ist z.B. Baypren®. Die Herstellung erfolgt durch Polymerisation von 2-Chlor-1,3-Butadien (Chloropren) .

Epichlorhydrin-Kautschuk (ECO) wird durch ringöffnende Polymerisation von Epichlorhydrin gegebenenfalls in Gegenwart von weiteren Comonomeren hergestellt. Kommerziell ist Epichlorhydrin-Kautschuk beispielsweise unter dem Handelsnamen HydrinECO® der Firma Zeon erhältlich.

Unter epoxidiertem Naturkautschuk wird Naturkautschuk verstanden, wie er vorstehend definiert ist, der epoxidiert wurde.

### Komponente B: nicht-elastomeres Polyolefin, das mit einem Anhydrid einer organischen Carbonsäure funktionalisiert ist:

Erfindungsgemäß ist das nicht-elastomere Polyolefin mit einem Anhydrid einer organischen Säure funktionalisiert, wie es weiter oben beschrieben ist. Bevorzugt findet die Funktionalisierung mittels Pfropfung (Grafting-Prozess) statt, wobei ein Anhydrid einer organischen Säure, vorzugsweise Maleinsäureanhydrid, an die Seitenkette eines geeigneten nicht-elastomeren Polyolefins aufgepfropft wird.

Als Basis für die Pfropfung werden handelsübliche nicht-elastomere Polyolefine eingesetzt, die im Folgenden beschrieben werden:
Nicht-elastomere Polyolefine sind beispielsweise Copolymere aus Polyethylen, wie HDPE (high density polyethylene), MDPE (medium density polyethylene), LDPE (low density polyethylene), LLDPE (linear low density polyethylene), VLDPE (very low density polyethylene); ein Homopolymer aus Propylen (hPP); ein statistisches Copolymer aus Propylen und Ethylen (rPP); und Kombinationen derselben.

Für die Erfindung geeignete nicht-elastomere Polyolefine, als Basis für die Funktionalisierung mit Anhydrid einer Dicarbonsäure, sind vor allem diejenigen, die sich für die Verarbeitung im Spritzguss eignen. Geeignete Polyolefine sind solche mit guten Fließeigenschaften und Steifigkeit.

Homopolymere von Propylen (hPP) sind kommerziell erhältlich und es kann jedes dieser erhältlichen hPPs erfindungsgemäß eingesetzt werden. Der Einsatz von hPP ist erfindungsgemäß bevorzugt.

Das hPP kann einen Schmelzindex-Wert gemäß ISO 1133 (bei 230°C mit 2,16 Kg) im Bereich von 0,5 g/10 min bis 200 g/10 min, und bevorzugt im Bereich von 4 g/10 min bis 50 g/10 min; eine Zugfestigkeit gemäß ISO 527-1, -2 im Bereich von 15 MPa bis 50 MPa, und vorzugsweise im Bereich von 20 MPa bis 40 MPa; eine Bruchdehnung gemäß ISO 527-1, -2 im Bereich von 1% bis 500%, und vorzugsweise im Bereich von 10% bis 300% aufweisen.

Kommerziel erhältliche hPP sind beispielsweise Produkte der Lyondell-Basell, die unter dem Handelsnamen Moplen® erhältlich sind, wie Moplen® HP500N, Moplen® HP501L.

Statistische Polypropylene-Copolymere (rPP) sind ebenso kommerziell erhältlich und jedes dieser rPPs kann erfindungsgemäß verwendet werden. Als Comonomer ist Ethylen und/oder Buten bevorzugt.

Das rPP kann einen Schmelzindex gemäß ISO 1133 (bei 230°C mit 2,16 Kg) im Bereich von 0,5 g/10 min bis 200 g/10 min, und vorzugsweise im Bereich von 4 g/10 min bis 50 g/10 min; eine Zugfestigkeit gemäß ISO 527-1, -2 im Bereich von 15 MPa bis 50 MPa, und vorzugsweise im Bereich von 20 MPa bis 40 MPa; eine Bruchdehnung gemäß ISO 527-1, -2 im Bereich von 1% bis 500%, und vorzugsweise im Bereich von 10% bis 300% aufweisen.

Es können Polyethylene verschiedener Dichte wie HDPE, MDPE, LDPE, LLDPE, VLDPE erfindungsgemäß verwendet werden. Diese sind ausreichend kommerziell verfügbar.

Es kann jegliches Polyethylen verwendet werden, dessen Schmelzfluss im Bereich von 0,5 g/min bis 10 g/10 min liegt. HDPE kann einen Schmelzindex gemäß ISO 1133 (bei 190°C mit 2,16 kg) im Bereich von 0,02 g/10 min bis 55 g/10 min, und vorzugsweise im Bereich von 0,9 g/10 min bis 10 g/10 min; eine Zugfestigkeit gemäß ISO 527-1, -2 (50 mm/min) im Bereich von 12 MPa bis 32 MPa, und vorzugsweise im Bereich von 20 MPa bis 30 MPa; eine Bruchdehnung gemäß ISO 527-1, -2 im Bereich von 50% bis 1200%, und vorzugsweise im Bereich von 600% bis 700% aufweisen.

LDPE kann einen Schmelzindex gemäß ISO 1133 (bei 190°C mit 2,16 kg) im Bereich von 0,5 g/10 min bis 200 g/10 min, und vorzugsweise im Bereich von 0,7 g/10 min bis 7 g/10 min; eine Zugfestigkeit gemäß ISO 527-1, -2 im Bereich von 6 MPa bis 33 MPa, und vorzugsweise im Bereich von 12 MPa bis 24 MPa; eine Bruchdehnung gemäß ISO 527-1, -2 im Bereich von 100% bis 800%, und vorzugsweise im Bereich von 500% bis 750% haben.

Besonders bevorzugt ist es erfindungsgemäß jedoch, dass das nicht-elastomere Polyolefin eines ist, das Propylen in seinen Wiederholungseinheiten umfasst. Noch stärker bevorzugt ist das nicht elastomere Polyolefin ein hPP.

Um aus den genannten Polyolefinen Polyolefine zu erhalten, die mit einem Anhydrid einer organischen Säure funktionalisiert sind, werden die genannten Polyolefine nach ihrer Herstellung durch Pfropfung mit einem Anhydrid einer organischen Säure versehen.

Unter Pfropfung versteht man allgemein, dass bei bereits vorgebildeten Molekülketten eines Primärpolymers (hier das nicht-elastomere Polyolefin) nachträglich Seitenketten aus anderen Molekülbausteinen (hier das Anhydrid der organischen Carbonsäure) "aufgepfropft" werden. Man spricht bei derartig funktionalisierten Polymeren auch von "Pfropfpolymeren". Pfropfpolymere können auf verschiedene Arten hergestellt werden, z.B. nach Vermengen des Primärpolymers mit den aufzupfropfenden Molekülbausteinen in einem gewünschten Verhältnis und anschließender Radikalbildung durch Zersetzung von Peroxiden oder durch Bestrahlung, vorzugsweise Peroxide. Dabei bilden sich Radikalstellen am Primärpolymer, an die sich die aufzupfropfenden Molekülbausteine anlagern. Hierfür muss das Anhydrid der organischen Carbonsäure eine reaktive Stelle aufweisen, an die die Radikalstelle des Primärpolymers angreifen kann. Eine Pfropfung kann teilweise auch schon eintreten, wenn eine Mischung aus Primärpolymer und aufzupfropfenden Molekülbausteinen intensiv mechanisch-thermisch behandelt wird. Die Pfropfreaktion wird vorzugsweise in einem Walzwerk oder einem Extruder durchgeführt (siehe auch: Saechtling, H. J.: Kunststoff-Taschenbuch, 26. Aufl., Oberbach, K. (Hrsg.), Carl Hanser Verlag, München 1995; oder: Römpps Chemie-Lexikon, Otto-Albrecht Neumüller, 8. Aufl., Franckh, Stuttgart 1985).

Vorzugsweise wird als Anhydrid einer organischen Carbonsäure eines verwendet, das als reaktive Stelle eine Doppelbindung aufweist. Besonders bevorzugt wird für die Pfropfung Maleinsäureanhydrid verwendet, das dann nach der Pfropfung als Bernsteinsäureanhydridrest gebunden an das nicht-elastomere Polyolefin vorliegt.

Die Menge des Maleinsäureanhydrids (eigentlich Bernstäureanhydridrest) liegt im gepfropften nicht-elastomeren Polyolefin im Bereich von 0,1 Gew.-% bis 5 Gew.-%, noch stärker bevorzugt im Bereich von 0,5 Gew.-% bis 2 Gew.-%, bezogen auf das Gesamtgewicht nicht-elastomeren Polyolefins, das mit einem Anhydrid einer organischen Caronsäure funktionalisiert wird.

Erfindungsgemäß bevorzugt als nicht elastomeres Polyolefin wird Polypropylen, besonders bevorzugt hPP verwendet. Ein mit Maleinsäureanhydrid gepfropftes Polypropylen wird in der Fachwelt auch als MAH-g-PP bezeichnet. Ein solches MAH-g-PP ist unter dem Handelsname "Scona® TPPP" bekannt und z.B. als die Typen "Scona® TPPP 2112 GA" oder "Scona® TPPP 8112 GA" erhältlich.

### Komponente C: thermoplastisches Elastomer auf Polyolefin-Blockcopolymer-Basis (TPO) und/oder funktionalisiertes g-TPO

Als erfindungsgemäße TPO auf Polyolefin-Blockcopolymer-Basis können die in Kapitel 5 von "G. Holden, H.R. Kricheldorf, R.P. Quirk (Eds)., Thermoplastic Elastomers, Carl Hanser Verlag, third edition, Munich (2004)" verwendet werden, wobei unter den darin beschriebenen TPOs ausschließlich die Blockcopolymere (Kapitel 5.1. und Kapitel 5.3) für die vorliegende Erfindung relevant sind. TPOs auf Basis von Blends wie beispielsweise EPDM und PP fallen nicht unter erfindungsgemäße TPOs. Die erfindungsgemäßen TPO auf Polyolefin-Blockcopolymer-Basis sind folglich Blockcoplymere, deren Blöcke aus Olefinmonomeren als Wiederholungseinheiten aufgebaut sind. Dabei weisen die erfindungsgemäßen TPO auf Polyolefin-Blockcopolymer-Basis mindestens zwei unterschiedliche Polymerblöcke auf. Diese Blöcke können aus einer Olefinsorte oder aus zwei oder mehreren Olefinsorten aufgebaut sein. Die zum Aufbau des erfindungsgemäßen TPOs auf Polyolefin-Blockcopolymer-Basis verwendeten Olefine sind aliphatische Olefine, wie bspw. Ethylen, Propylen oder Butylen, wobei erfindungsgemäß Ethylen und Propylen bevorzugt sind. Besonders bevorzugt sind die erfindungsgemäßen TPO auf Polyolefin-Blockcopolymer-Basis ausschließlich aus aliphatischen Olefinen als sogenannte Wiederholungseinheiten aufgebaut. Erfindungsgemäß sind von der Definition der "TPO auf Polyolefin-Blockcopolymer-Basis" solche ausgenommen, die einen aromatischen Rest aufweisen (solche sind für den Fachmann als TPS (thermoplastische Elastomere auf Styrol-Basis) bekannt). Besonders bevorzugt für die hier beschriebene Anwendung beziehungsweise die erfindungsgemäße Zusammensetzung sind TPO, deren Blöcke aus Polypropylen, Polyethylen oder einem statistischen Ethylen/Propylen-Copolymer aufgebaut sind bzw. daraus bestehen. Kommerziell erhältlich sind solche TPO beispielsweise unter dem Handelsnamen Hifax CA 10 A der Fa. Lyondell-Basell. Weiterhin besonders bevorzugt sind die in US 8,481,637 B2 ausführlich beschriebenen Polyolefin-Blockcopolymere (dort als "olefin block copolymers, OBC" bezeichnet) auf die hier in vollem Umfang Bezug genommen wird. Hierbei handelt es sich um Polymere, die abwechselnde Blöcke eines harten (sehr starren) und eines weichen (hochelastomeren) Segments aufweisen. Solche Produkte werden von Dow Chemicals unter dem Handelsnamen INFUSE™ vertrieben. Insbesondere sind die Typen mit Verwendungsempfehlung für TPE bevorzugt (INFUSE™ 9010, 9007, 9107,9807).

Weitere Beispiele erfindungsgemäßer TPO auf Polyolefin-Blockcopolymer-Basis sind sogenannte hydrierte Dien-Blockcolymere. Solche Polymere weisen vorzugsweise Polymerblöcke auf, die aus hydriertem Polybutadien oder hydriertem Polyisopren bestehen.

Das funktionalisierte thermoplastische Elastomer auf BlockcoPolymer-Basis (g-TPO) ist vorzugsweise eines, das mit einem Anhydrid einer organischen Säure funktionalisiert ist. Das g-TPO wird vorzugsweise hergestellt, indem ein TPO - wie es vorstehend beschrieben ist - durch Pfropfung mit einem Anhydrid einer organischen Säure versehen wird. Hierfür können die gleichen Anhydride wie für die Komponente B verwendet werden. Die Pfropfung erfolgt ebenso wie für Komponente B und die dort angegebenen bevorzugten Anhydride und eingesetzten Mengen gelten erfindungsgemäß auch für das g-TPO. Kommerziell erhältlich sind solche g-TPO beispielsweise unter dem Handelsnamen BYK LP-T 23369 der Fa. BYK.

### Komponente D: Vernetzungsmittel

Je nach verwendetem Elastomer ist einem Fachmann bekannt, welches Vernetzungsmittel er nehmen kann, um eine Vernetzung zu erzielen. Erfindungsgemäß sind die weiter oben genannten Elastomere entweder durch Zusatz von Peroxiden, Schwefel oder Metallionen vernetzbar.

Als radikalische Vernetzungsinitiatoren (Vernetzungsmittel) geeignete Peroxide sind dem Fachmann bekannt; Beispiele hierfür sind organische Peroxide, z.B. Alkyl- und Arylperoxide, Alkylpersäureester, Arylpersäureester, Diacylperoxide, polyvalente Peroxide wie 2,5-Dimethyl-2,5-di(tert-butylperoxy)hexin-3 (z.B. Trigonox® 145-E85 oder Trigonox® 145-45 B), Di-tert-butylperoxid (z.B. Trigonox® B), 2,5-Dimethyl-2,5-di(tert-butylperoxy)hexin (z.B. Trigonox® 101), tert-Butyl-cumyl-peroxid (z.B. Trigonox® T), Di-tert-butyl-peroxyisopropyl(benzol) (z.B. Perkadox® 14-40), Dicumylperoxid (z.B. Perkadox® BC40), Benzoylperoxid, 2,2- bis (tert-butylperoxy)diisopropylbenzol (z.B. Volcup® 40 AE), 3,2,5-Trimetyl-2,5-di(benzoylperoxy)hexan und (2,5-bis(tert-butylperoxy)-2,5-dimetylhexan, 3,3,5,7,7-Pentametyl-1,2,4-trioxepan (z.B. Trigonox® 311).

Bevorzugt werden solche Peroxide eingesetzt, deren Vernetzungstemperaturen oberhalb der Schmelz- beziehungsweise Erweichungstemperaturen der Komponente A liegen. Aufgrund der hohen Schmelz- beziehungsweise Erweichungstemperatur der Komponente B erfolgt erfindungsgemäß die Vernetzung der elastomeren Phase (des Elastomers) zur Herstellung der thermoplastischen Elastomerzusammensetzungen vorzugsweise in einer entsprechend heißen Schmelze. Dies erfordert - in einer bevorzugten Ausführungsform - den Einsatz von Peroxiden mit hohen Vernetzungstemperaturen. Peroxide mit niedrigeren (üblichen) Vernetzungstemperaturen zerfallen bereits bei erstem Kontakt mit der Polymerschmelze und werden nicht homogen eingemischt und vernetzen die elastomere Phase nicht ausreichend oder inhomogen. Besonders bevorzugt werden daher erfindungsgemäß Peroxide eingesetzt, die Vernetzungstemperaturen von ≥ 175°C, besonders bevorzugt ≥ 180°C, ganz besonders bevorzugt ≥ 185°C, insbesondere bevorzugt ≥ 190°C und weiter bevorzugt ≥ 200°C aufweisen.

Bei Verwendung eines Peroxids als Vernetzungsmittel ist es weiterhin erfindungsgemäß bevorzugt, dass die (noch vernetzbaren) thermoplastischen Elastomerzusammensetzungen ein Gewichtsverhältnis von Peroxid zu Elastomer in einem Bereich von 0,1 bis 5, bevorzugt 0,5 bis 5, und ganz besonders bevorzugt 0,6 bis 1,8 aufweisen.

Die Vernetzung mithilfe von Schwefel ist eine der ältesten Vernetzungsmöglichkeiten von Kautschuken, die dem Fachmann auf diesem Gebiet bekannt ist.

### Komponente E: Covernetzer

In einer bevorzugten erfindungsgemäßen Ausführungsform enthalten die thermoplastischen Elastomerzusammensetzungen zusätzlich mindestens einen Covernetzer als Komponente E. Der Covernetzer wird in einem Gewichtsverhältnis Elastomer zu Covernetzer im Bereich von 100:10 bis 100:2 und stärker bevorzugt im Bereich von 100:8 bis 100:3 eingesetzt.

Geeignete Covernetzer für Peroxide als Vernetzungsmittel sind zum Beispiel aus der Gruppe bestehend aus Triallylisocyanurat (TAIC) (z.B. DIAK™-7 von DuPont), Trimethylolpropantrimethacrylat (TRIM) (z.B. Rhenogran® TRIM S von Rheinchemie), N,N'-m-Phenylendimaleimid (z. B. HVA™-2® von DuPont Dow), Triallylcyanurat (TAC), flüssiges Polybutadien (z. B. Ricon® D153 von Ricon Resins), p-Chinodixon, p,p'-Dibenzoylchinodioxin, N-Methyl-N,N-dinitrosoanilin, Nitrobenzol, Diphenylguanidin, Trimethylolpropan-N,N'-m-phenylenmaleimid, N-Methyl-N,N'-m-phenylendimaleimid, Divinylbenzol, polyfunktionellen Methacrylatmonomeren wie Ethylenglykoldimethacrylat, Diethylenglykoldimethacrylat, Polyethylenglykoldimethacrylat, Trimethylolpropantrimethacrylat und Allylmethacrylat, und polyfunktionellen Vinylmonomeren wie Vinylbutyrat und Vinylstearat. Bevorzugt eingesetzte Covernetzer sind ausgewählt aus der Gruppe bestehend aus Trimethylolpropantrimethacrylat (TRIM), Triallyliso-cyanurat (TAIC), N,N'-m-Phenylendimaleimid, Triallylcyanurat (TAC) und flüssigem Polybutadien. Besonders bevorzugt wird Trimethylolpropantrimethacrylat (TRIM) als Covernetzer eingesetzt. Es ist möglich, in den erfindungsgemäßen vernetzbaren Zusammensetzungen einen Covernetzer oder zwei oder mehr Covernetzer gemeinsam einzusetzen.

### Komponente F: Weichmacher

Geeignete Weichmacher sind dem Fachmann grundsätzlich bekannt. Geeignete Weichmacher für polare Elastomere (EVM, NBR, H-NBR, AEM, ACM, etc.) sind z.B. Ester-Weichmacher, wie Phthalsäureester, beispielsweise Dioctylphthalat, Diisooctylphthalat, Dinonylphthalat oder Diisodecylphthalat; aliphatische Ester, wie Dioctylsäureester oder Dioctylsebacinsäureester; Phosphorsäureester wie Trikresylphosphorsäureester, Diphenylkresylsäureester oder Trioctylphosphat; Polyester, wie Polyphthalsäureester, Polyadepinsäureester oder Polyesterether.

Geeignete Weichmacher für unpolare Elastomere (z.B. Styrol-Butadien-Kautschuk) sind technische oder medizinische Mineral- oder Weißöle, native Öle, wie beispielsweise Soja- oder Rapsöl, ferner Alkylsulfonylester, insbesondere Alkylsulfonylphenylester, wobei die Alkylsubstituenten lineare und/oder verzweigte Alkylketten mit > 5C-Atomen enthalten. Ferner Di- oder Tri-Alkylester der Mellitsäure, wobei die Alkylsubstituenten vorzugsweise lineare und/oder verzweigte Alkylketten mit > 4 C-Atomen enthalten. Des Weiteren finden auch Alkylester von Di-, Tri- und höheren Polycarbonsäuren, wobei die Alkylsubstituenten vorzugsweise lineare und/oder verzweigte Alkylketten sind, als entsprechende Weichmacher Verwendung. Als Beispiele seien genannt: Adipinsäure-di-2-ethylhexylester und Tributyl-O-acetylcitrat. Weiterhin können auch Carbonsäureester von Mono- und/oder Polyalkylenglycolen als Weichmacher eingesetzt werden, wie beispielsweise Ethylenglycoladipat.

Als geeignete Weichmacher können auch Mischungen der beschriebenen Substanzklassen eingesetzt werden.

### Komponente G: Stabilisatoren, Hilfsstoffe und Farbstoffe (Additive)

Geeignete Additive sind z.B. Verarbeitungshilfsstoffe, Metallseifen, Fettsäuren und Fettsäurederivate, Faktis ([Kunstwort]: kautschukähnlicher Stoff, der z.B. durch Einwirken von Schwefel oder Schwefelchlorid auf trocknende Öle gewonnen wird; dient zum Strecken von Kautschuk), Alterungs-, UV- oder Ozonschutzmittel wie Ozonschutzwachse, Antioxidantien, z.B. Polycarbodiimide (z.B. Rhenogran®, PCD-50), substituierte Phenole, substituierte Bisphenole, Dihydrochinoline, Diphenylamine, Phenylnaphthylamine, Paraphenylendiamine, Benzimidazole, Paraffinwachse, mikrokristalline Wachse, Pigmente, Farbstoffe wie Titandioxid, Litophone, Zinkoxid, Eisenoxid, Ultramarinblau, Chromoxid, Antimonsulfit; Stabilisatoren wie Wärmestabilisatoren, Stabilisatoren gegen Bewitterung; Oxidationsschutzmittel, z.B. p-Dicumyldiphenylamin (z.B. Naugard® 445), styrolisiertes Diphenylamin (z.B. Vulcanox® DDA), Zinksalz von Methylmercaptobenzimidazol (z.B. Vulcanox® ZMB2), polymerisiertes 1,2-Dihydro-2,2,4-trimethylchinolin (z.B. Vulcanox® HS), Thiodiethylen-bis(3,5-di-tert-butyl-4-hydroxy)hydrocinamat, Tiodiethylen-bis[3-(3,5-di-tert-butyl-4-hydroxyphenyl)propionat] (z.B. Irganox® 1035), Gleitmittel, Entformungsmittel, Antiflammmittel (Flammschutzmittel), Haftvermittler, Markierungsstoffe, Mineralien sowie Kristallisationsbeschleuniger und -verzögerer.

Als Prozesshilfsstoffe und Stabilisatoren können die folgenden verwendet werden: Antistatika, Antischäummittel, Gleitmittel, Dispergiermittel, Trennmittel, Anti-Blocking-Agentien, Radikalfänger, Antioxidantien, Biozide, Fungizide, UV-Stabilisatoren, sonstige Lichtschutzmittel, Metalldesaktivatoren, des Weiteren auch Additive wie Schäumhilfen, Treibmittel, Flammschutzmittel, Rauchgasunterdrücker, Schlagzähmodifikatoren, Haftmittel, Anti-Fogging-Mittel, Farbstoffe, Farbpigmente, Farbmasterbatches, Viskositätsmodifikatoren und Mittel zum Alterungsschutz.

Besonders bevorzugt werden als Hilfsstoffe Stabilisatoren und Alterungsschutzmittel eingesetzt.

### Komponente H: Füllstoffe

Geeignete Füllstoffe sind z.B. Ruß, Kreide (Calciumcarbonat), Kaolin, Kieselerde, Talkum (Magnesiumsilicat), AluminiumoxidHydrat, Aluminiumsilicat, Calciumcarbonat, Magnesiumcarbonat, Calciumsilicat, Magnesiumsilicat, Bariumsulfat, Zinkcarbonat, calciniertes Kaolin (z.B. Polestar® 200 P), Calciumoxid, Magnesiumoxid, Titanoxid, Aluminiumoxid, Zinkoxid, silanisierte Kaoline, silanisiertes Silicat, beschichtete Kreide, behandelte Kaoline, pyrogene Kieselsäure, hydrophobierte pyrogene Kieselsäure (z.B. Aerosil® 972), synthetische amorphe Fällungskieselsäure (Silica, Industrieruß, Graphit, nanoskalige Füllstoffe wie Kohlenstoff-Nanofibrillen, Nanoteilchen in Plättchenform oder nanoskalige Siliciumdioxid-Hydrate und Mineralien.

Herstellung der erfindungsgemäßen Zusammensetzungen und Vernetzen oder Mischen zu thermoplastischen Elastomerzusammensetzungen:
Die thermoplastischen Elastomerzusammensetzungen gemäß der vorliegenden Erfindung können durch Mischen der Komponenten A, B, C, D, E, F, G und H - soweit sie in den Zusammensetzungen vorliegen - hergestellt werden. Die Mischung kann dabei unter Verwendung von in der Kautschuktechnologie und Kunststofftechnologie bekannten Mischsystemen wie Knetern, Innenmischern, z. B. Innenmischern mit ineinander greifender oder tangierender Rotorgeometrie, sowie auch in kontinuierlich mischenden Anlagen wie Mischextrudern, z. B. Mischextrudern mit 2 bis 4 und mehr Wellenschnecken (z.B. Doppelschneckenextrudern, erfolgen.

Bei der Durchführung des erfindungsgemäßen Herstellungsverfahrens ist es wichtig, darauf zu achten, dass die Mischungstemperatur hoch genug ist, dass die Komponenten B und C - sofern erfindungsgemäß eingesetzt - in den plastischen Zustand überführt werden können, jedoch dabei nicht geschädigt werden. Dies wird gewährleistet, wenn eine Temperatur oberhalb der höchsten Schmelz- oder Erweichungstemperatur der Komponente B und C - sofern erfindungsgemäß eingesetzt - gewählt wird.

Besonders bevorzugt wird das Mischen der Komponenten - soweit sie in den Zusammensetzungen vorliegen - bei einer Temperatur im Bereich von 150°C bis 350°C, bevorzugt 150°C bis 280°C, besonders bevorzugt 170°C bis 240°C vorgenommen.

Grundsätzlich sind verschiedene Varianten zum Mischen der einzelnen Komponenten möglich.
Variante 1: A, B, C, D, E, F, G und H werden - sofern in der erfindungsgemäßen Zusammensetzung enthalten - gemeinsam vorgelegt und bei Temperaturen oberhalb der höchsten Schmelz- oder Erweichungstemperaturen der Komponenten B und C innig vermischt.
Variante 2: A, B, C, F, G und H werden - sofern in der erfindungsgemäßen Zusammensetzung enthalten - gemeinsam vorgelegt und bei Temperaturen oberhalb der höchsten Schmelz- oder Erweichungstemperaturen der Komponenten B und C innig vermischt. Anschließend werden die Komponenten D und E (soweit sie in der erfindungsgemäßen Rezeptur vorliegen) zugegeben und weiter bei Erhalt der erreichten Temperatur gemischt.
Variante 3: A, D, E, F, G und H werden - sofern in der erfindungsgemäßen Zusammensetzung enthalten - gemeinsam vorgelegt und innig bis unterhalb der Reaktionstemperatur von D gemischt. Dann werden die Komponenten B und C zugegeben und auf Erweichungstemperatur von B und C bei anhaltendem Mischen erhitzt. Die Zugabe von B und C kann oberhalb oder unterhalb der Erweichungstemperatur von B und C erfolgen.
Variante 4: B, C und H werden - sofern in der erfindungsgemäßen Zusammensetzung enthalten - gemeinsam vorgelegt und bei Temperaturen oberhalb der höchsten Schmelz- oder Erweichungstemperaturen der Komponenten B und C innig vermischt. Die Komponenten A, D, E, F und G werden (sofern in der erfindungsgemäßen Rezeptur enthalten) zugegeben und oberhalb der höchsten Schmelz- oder Erweichungstemperaturen der Komponenten B und C innig weiter vermischt.

Besonders bevorzugt ist Variante 1 für die Herstellung auf dem Innenmischer. Variante 3 ist besonders bevorzugt für die Herstellung auf kontinuierlichen Mischanlagen.

Durch die vorstehend genannten Verfahrensvarianten, insbesondere durch die Verfahrensvarianten 1 und 3, wird erreicht, dass die Komponente A, und die Komponenten B und C nach dem Abschluss der Herstellung eine möglichst feine und gleichmäßige Verteilung erfahren haben.

Die Zugabezeit, Temperatur, Form und Menge der Komponenten E und F sollten darüber hinaus so gewählt sein, dass eine gute Verteilung der Komponenten D und gegebenenfalls E in der Elastomerphase gewährleistet ist, die Elastomer- und Thermoplastphase in dem oben beschriebenen Zustand vorliegen und erst dann die Vernetzung der Elastomerphase erfolgt, so dass eine Phasenumkehr erfolgt oder eine co-kontinuierliche Phasenstruktur der elastomeren Phase und der thermoplastischen Phase erfolgt.

In dem erfindungsgemäßen Verfahren ist es bevorzugt, dass gemäß der angegebenen Variante 3 das Elastomer mit dem Thermoplast (mit dem Thermoplast ist hierin immer das nicht-elastomere Polyolefin, das mit einem Anhydrid einer organischen Säure funktionalisiert ist, gemeint) in einem Extruder, einem Innenmischer oder einem Kneter, vorzugsweise in einem Doppelschnecken-Extruder, vermischt wird.

In dem erfindungsgemäßen Verfahren der Variante 3 ist weiterhin bevorzugt, dass gemäß der angegebenen Variante 3 das Elastomer mit dem TPO und Thermoplast in einem Extruder, einem Innenmischer oder einem Kneter, vorzugsweise in einem Doppelschnecken-Extruder, vermischt wird.

In dem erfindungsgemäßen Verfahren der Variante 3 ist weiterhin bevorzugt, dass gemäß der angegebenen Variante 3 das Elastomer mit dem g-TPO und Thermoplast in einem Extruder, einem Innenmischer oder einem Kneter, vorzugsweise in einem Doppelschnecken-Extruder, vermischt wird.

In dem erfindungsgemäßen Verfahren der Variante 3 wird vorzugsweise in einem ersten Verfahrensschritt das Elastomer zunächst vorbehandelt, und in einem zweiten Verfahrensschritt wird der Thermoplast hinzugegeben.

In dem ersten Schritt ist es bevorzugt, dass das Elastomer in einem Extruder, einem Innenmischer oder einem Kneter, vorzugsweise in einem Doppelschnecken-Extruder, vorbehandelt wird. Unter "Vorbehandeln" versteht man vorzugsweise, dass das Elastomer erweicht wird, vorzugsweise bei einer Temperatur im Bereich von 50°C bis 120°C, stärker bevorzugt im Bereich von 80°C bis 110°C. Diese Vorbehandlung erfolgt vorzugsweise in einem der angegebenen Geräte. Dieses Prozedere ist dem Fachmann bekannt unter dem Begriff "Mastikation". Dabei wird vorzugsweise zusätzlich zu dem Elastomer ein Vernetzungsmittel eingesetzt, so dass das erweichte Elastomer zusammen mit einem Vernetzungsmittel (innig) vermischt wird. Zusätzlich zu dem Elastomer und dem Vernetzungsmittel kann noch ein Covernetzer, ein Weichmacher oder eines der weiter oben angegebenen Additive zugesetzt werden. Das Vernetzungsmittel, der Covernetzer, der Weichmacher beziehungsweise die weiteren Additive sind vorzugsweise solche, wie sie weiter oben in Verbindung mit der erfindungsgemäßen thermoplastischen Elastomerzusammensetzung genannt sind.

Weiterhin ist es bevorzugt, dass in dem erfindungsgemäßen Verfahren - vorzugsweise gemäß Variante 3 - vor dem zweiten Schritt, d.h. vorzugsweise parallel zu dem ersten Verfahrensschritt, der Thermoplast in einem Extruder, einem Innenmischer oder einem Kneter, vorzugsweise einem Doppelschnecken-extruder vorbehandelt wird. Unter "Vorbehandeln" versteht man vorzugsweise, dass der Thermoplast geschmolzen wird, vorzugsweise bei einer Temperatur im Bereich von 160°C bis 280°C, stärker bevorzugt 200°C bis 260°C hergestellt wird. Weiterhin ist es bevorzugt, dass der Thermoplast zusammen mit dem thermoplastischen Elastomer auf Polyolefin-Blockcopolymer-Basis geschmolzen und gemischt wird.

Wie bereits erwähnt, wird nach dem zweiten Verfahrensschritt, d.h. der Zugabe des Thermoplasts zu dem Elastomer, die resultierende Zusammensetzung vermengt. In anderen Worten wird in einem dritten Verfahrensschritt die Mischung aus Elastomer und Thermoplast sowie den eventuell weiteren Komponenten vorzugsweise extrudiert, stärker bevorzugt bei einer Temperatur im Bereich von 180°C bis 260°C, stärker bevorzugt in einem Bereich von 200°C bis 240°C. In einem vierten Verfahrensschritt erfolgt vorzugsweise das Kneten des aus dem dritten Verfahrensschritt erhaltenen Gemenges.

Die erfindungsgemäßen Zusammensetzungen eignen sich hervorragend zur Bereitstellung thermoplastischer Elastomere mit ausgewogenen Eigenschaften, insbesondere mit sehr guter Temperatur- und chemischer Beständigkeit bei gleichzeitig sehr guten elastischen Eigenschaften (Druckverformungsrest, Bruchdehnung und Zugfestigkeit) in einem weiten Härtebereich. Zudem weisen sie eine hervorragende Haftung zu Polyamiden auf.

Gemäß der vorliegenden Erfindung wird das Elastomer während oder nach dem Vermengen mit dem Thermoplast vernetzt, d.h. die Vernetzung erfolgt dynamisch. Die Vernetzung der vorzugsweise dispersen elastomeren Phase (Elastomer) erfolgt vorzugsweise während der Mischung der Komponenten A bis H (soweit diese in der Mischung vorliegen). Die Vernetzung setzt vorzugsweise ein, wenn das Vermengen (Vermischen) bei einer Temperatur oberhalb der Schmelz- oder Erweichungstemperatur der Komponenten B und C - sofern erfindungsgemäß vorhanden - in Anwesenheit der Komponenten D und gegebenenfalls E über einen Zeitraum von mindestens 15 sec fortgeführt wird.

Nach erfolgter Phasenumkehr bzw. Ausbildung einer cokontinuierlichen Phase wird das erhaltene Produkt, d. h. die thermoplastische Elastomerzusammensetzung, vorzugsweise auf eine Temperatur unterhalb der Schmelz- oder Erweichungstemperatur des oder der Komponenten B und C - sofern erfindungsgemäß vorhanden - abgekühlt.

Ein weiterer Gegenstand der vorliegenden Erfindung sind thermoplastische Elastomerzusammensetzungen, die durch die erfindungsgemäßen Verfahren erhältlich sind.

Die in der vorliegenden Anmeldung verwendeten Begriffe "umfassen", "enthalten" und "aufweisen" sollen auch in jedem Fall, in dem sie verwendet werden, den Begriff "bestehen aus" mitumfassen, so dass diese Ausführungsformen auch in dieser Anmeldung offenbart sind.

Die vorliegende Erfindung soll nun durch die folgenden Ausführungsbeispiele genauer erläutert werden. Die folgenden Ausführungsbeispiele haben nur exemplarischen Charakter und dienen nicht dazu, die vorliegende Erfindung darauf zu beschränken.

### Beispiele:

### Bestimmungsmethoden und Definitionen:

Die Bestimmung der Dichte erfolgt gemäß DIN EN ISO 1183-1.

Die Bestimmung der Shore-Härte erfolgt gemäß DIN EN ISO 868 und DIN ISO 7619-1.

Unter der Zugfestigkeit versteht man die maximale mechanische Zugspannung, die ein Werkstoff aushält, bevor er bricht/reißt. Sie wird im Zugversuch aus der maximal erreichten Zugkraft bezogen auf den ursprünglichen Querschnitt der (genormten) Probe errechnet und in N/mm² angegeben.

Die Bruchdehnung ist ein Materialkennwert, der die bleibende Verlängerung des Bruches, bezogen auf die Anfangsmesslänge, angibt. Die Bruchdehnung ist bei der Werkstoffprüfung eine von vielen Kenngrößen und charakterisiert die Verformungsfähigkeit eines Werkstoffes. Sie ist die auf die Anfangsmesslänge *L*₀ einer Probe im Zugversuch bezogene bleibende Längenänderung Δ*L* nach erfolgtem Bruch. Diese Längenänderung wird in % angegeben.

Der Druckverformungsrest ist ein Maß dafür, wie sich (thermoplastische) Elastomere bei lang andauernder, konstanter Druckverformung und anschließender Entspannung verhalten. Nach DIN ISO 815 wird der Druckverformungsrest (DVR, engl. compression set) bei konstanter Verformung gemessen. Dieser stellt den Verformungsanteil des Testmaterials dar. Viele Testverfahren für Elastomere, wie z. B. die Zugfestigkeit charakterisieren die Qualität und Beschaffenheit des Materials. Der DVR hingegen ist ein wichtiger Faktor, der vor Einsatz eines Materials für einen bestimmten Einsatzzweck beachtet werden muss. Besonders für den Einsatz von Dichtungen und Unterlegplatten aus Elastomeren ist die bleibende Verformung, der Druckverformungsrest (DVR) eine wichtige Kenngröße. Zur Bestimmung dieser Größe wird ein zylindrischer Prüfkörper um z. B. 25 % zusammengedrückt und bei bestimmter Temperatur eine gewisse Zeit so gelagert. Die Temperatur und das Medium (meist Luft, aber auch Öle und andere Gebrauchsflüssigkeiten) für den Druckverformungstest hängen von dem zu testenden Material, seinem geplanten Einsatzzweck und dem Versuchsaufbau ab (z. B. 24 h bei 150 °C). 30 Minuten nach der Entlastung wird bei Raumtemperatur wieder die Höhe gemessen und daraus die bleibende Verformung ermittelt. Ein Druckverformungsrest von 0 % bedeutet, dass der Körper seine ursprüngliche Dicke wieder voll erreicht hat, ein DVR von 100 % sagt, dass der Körper während des Versuchs völlig verformt wurde und keine Rückstellung zeigt. Die Berechnung erfolgt nach folgender Formel: DVR (%) = (L₀ - L₂) / (L₀ - L₁) x 100 %, wobei:
DVR = Druckverformungsrest in %
L₀ = Höhe des Probekörpers vor der Prüfung
L₁ = Höhe des Probekörpers während der Prüfung (Distanzstück)
L₂ = Höhe des Probekörpers nach der Prüfung.

Weiterhin wurde die Kraft in MPa gemäß DIN ISO 34-1 gemessen, die benötigt wird, um das thermoplastische Elastomer um 100%, 200% bzw. 300% zu dehnen. Hierbei wird ein Körper - wie er in der genannten Norm definert ist - genommen und unter Messung der benötigten Kraft um die angegebene Länge gedehnt.

Die Bestimmung der Weiterreißfähigkeit erfolgt gemäß DIN 53504/ISO 37.

Der Abrieb der thermoplastischen Elastomerzusammensetzungen wird gemessen, indem ein 6 mm hoher Zylinder mit 16 mm Durchmesser über 40 m Schmirgelpapier mit Körnung 60 mit einem Anpressdruck von 10 N gerieben wird.

Die Haftung der thermoplastischen Elastomerzusammensetzungen auf PA6 wird gemäß VDI2019 bestimmt: Als PA6 wird eines mit der Produktbezeichnung Frianyl B3V2 NC1102 verwendet.

Zur Bestimmung der Medienbeständigkeit werden S2-Prüfstäbe oder Plättchen der erfindungsgemäßen thermoplastischen Elastomerzusammensetzungen in den in Tabellen 5 bis 8 angegebenen Medien bei den angegebenen Temperaturen für die angegebene Zeit gerührt. Für die mechanischen Messungen werden die Prüfstäbe und für die Bestimmung der Dichte, usw. werden die Plättchen verwendet.

Nach der Lagerung in den angegebenen Medien werden die Volumenänderung, die Dichteänderung, die Gewichtsänderung gemessen. Weiterhin werden nochmals die Zugfestigkeit, die Bruchdehnung sowie Kraft gemessen, die benötigt wird, um das thermoplastische Elastomer um 100%, 200% bzw. 300% zu dehnen.

Die Heißluftalterung wird bei 120°C durchgeführt und die erzielten Ergebnisse sind in Tabelle 9 gezeigt.

### Ausführungsbeispiele:

Tabelle 1 gibt die verwendeten Abkürzungen für die in den Beispielen eingesetzten Komponenten an:

**Tabelle 1:**

| **Komponente** | **Rohstoff** |
|---|---|
| A | Elastomer (Kautschuk) |
| B | Polypropylen, mit einem Anhydrid einer organischen Carbonsäure funktionalisiert |
| C | Thermoplastisches Elastomer auf Polyolefin-Basis und/oder g-TPO |
| D | Vernetzungsmittel |
| E | Covernetzer |
| F | Weichmacher |
| G | Stabilisator, Hilfsstoff und Farbstoff |
| H | Füllstoff |

### Beispiele 1 und: Herstellung von erfindungsgemäßen thermoplastischen Elastomerzusammensetzungen:

Es werden gemäß der oben genannten Herstellungsvariante 3 thermoplastische Elastomerzusammensetzungen mit den aus Tabellen 2 und 3 ersichtlichen Bestandteilen hergestellt. Für das Vermengen der eingesetzten Komponenten wird ein Doppelschneckenextruder verwendet. In Tabelle 4 sind die mechanischen Meßwerte angegeben. Die Tabellen 5 bis 7 geben die mechanischen Werte nach Behandlung in diversen Medien an.

**Tabelle 2:**

| **Zusammensetzungen** | | | |
|---|---|---|---|
| | | **Beispiel 1** | **Beispiel 2** |
| Rohstoff | Komponente | | |
| Elastomer | A1 | 100 | |
| Elastomer | A2 | | 100 |
| nicht-elastomers Polyolefin (funktionalisiert) | B | 19 | 26,7 |
| TPO | C | 6,5 | 8,3 |
| Vernetzer (10 Gew.-% Peroxid) | D | 11 | 13,5 |
| Covernetzer | E | 6 | 6 |
| Weichmacher | F | 20 | 25 |
| Stabilisation, Hilfsstoffe und Farbe: | G | | |
| Additiv 1 | | | |
| Additiv 2 | | 0,3 | 0,3 |
| Additiv 3 | | 0,1 | 0,09 |
| Additiv 4 | | 0,35 | |
| Additiv 5 | | 0,1 | 0,09 |
| | | | 0,3 |
| Füllstoff | H | 4 | 4 |

**Tabelle 3:**

| **Eingesetzte Rohstoffe** | | | |
|---|---|---|---|
| | | | |

| **Rohstoff** | **Komponente** | **Hersteller** | **Typ** |
|---|---|---|---|
| Elastomer | A1 | Lanxess | Perbunan 3446 F |
| Elastomer | A2 | Lanxess | EVM 600 |
| nicht-elastomers Polyolefin (funktionalisiert) | B | BYK | Scona Tppp 2112 GA |
| TPO | C | Lyondell Basel | Hifax CA 10A |
| Vernetzungsmittel | D | Pergan | Peroxan HXY10PSVP796 |
| Covernetzer | E | Kettlitz | PerTAC-GR |
| Weichmacher | F | Safic Alkan | Edenol T810T |
| Stabilisation, Hilfsstoffe und Farbe: | G | | |
| Additiv 1 | | BASF | Tinuvin 326 |
| Additiv 2 | | BASF | Chimasorb 944 FDL |
| Additiv 3 | | BASF | Tinuvin 622 SF |
| Additiv 4 | | BASF | Irgafos 168 |
| Additiv 5 | | BASF | Irganox 1330 |
| Füllstoffe | H | Bayer | ZnO Aktiv |

**Tabelle 4:**

| **Mechanische Werte** | | | |
|---|---|---|---|
| | | **Beispiel 1** | **Beispiel 2** |
| **Wert** | **Einheit** | | |
| Dichte | g/cm³ | 1,021 | 1,044 |
| Härte | ShA | 70 | 70 |
| Zugfestigkeit | N/mm² | 6,3 | 7,7 |
| Bruchdehnung | % | 268 | 295 |
| 100% | MPa | 3,2 | 3,8 |
| 200% | MPa | 4,8 | 5,8 |
| 300% | MPa | - | 7,8 |
| Weiterreißfähigkeit | N/mm² | 20,6 | 17,9 |
| Druckverformungsrest bei 25°C/22h | % | 30,0 | 24,0 |
| Druckverformungsrest bei 70°C/22h | % | 30,5 | 26,0 |
| Druckverformungsrest bei 100°C/22h | % | 35,0 | 29,0 |
| Druckverformungsrest bei 120°C/22h | % | 38,0 | 36,0 |
| Druckverformungsrest bei 140°C/22h | % | 57,0 | 57,0 |
| Druckverformungsrest bei 150°C/22h | % | 64,5 | 67,5 |
| Haftung auf PA6 | N/mm² | 5,0 | 2,7 |
| Abrieb | mm³ | 502 | 359 |

| | | | |
|---|---|---|---|
| Die Werte für Dichte, Härte, Zugfestigkeit, Bruchdehnung, Dehnkraft(100%, 200%, 300%) und Weiterreißfähigkeit sind bei Raumtemperatur aufgenommen | | | |

**Tabelle 5:**

| gemessene Größe | Zeitraum der Behandlung | Medium | Temperatur | Beispiel 1 | Beispiel 2 |
|---|---|---|---|---|---|
| Dichte Δ% | Startwert | | | 0 | 0 |
| | 1 Woche | | | -5,5 | 0,4 |
| | 3 Wochen | | | -6,2 | 1,7 |
| Gewicht Δ% | Startwert | | | 0 | 0 |
| | 1 Woche | | | -6,5 | -0,8 |
| | 3 Wochen | | | -0,2 | -1,7 |
| Volumen Δ% | Startwert | | | 0 | 0 |
| | 1 Woche | | | -6,5 | -0,8 |
| | 3 Wochen | | | -6,4 | 0 |
| Härte (ShA) | Startwert | | | 71 | 74 |
| | 1 Woche | | | 75 | 74 |
| | 3 Wochen | | | 76 | 73 |
| Zugfestigkeit (N/mm²) | Startwert | | | 6,6 | 7,5 |
| | 1 Woche | IRM 901 | 100°C | 6,8 | 7 |
| | 3 Wochen | | | 6,1 | 6,7 |
| Bruchdehnung (%) | Startwert | | | 299 | 305 |
| | 1 Woche | | | 241 | 263 |
| | 3 Wochen | | | 174 | 257 |
| 100% (MPa) | Startwert | | | 3,2 | 3,6 |
| | 1 Woche | | | 3,8 | 3,7 |
| | 3 Wochen | | | 4,3 | 3,6 |
| 200% (MPa) | Startwert | | | 4,7 | 5,5 |
| | 1 Woche | | | 5,7 | 5,8 |
| | 3 Wochen | | | 0 | 5,7 |
| 300% (MPa) | Startwert | | | 7 | 7,4 |
| | 1 Woche | | | 0 | 0 |
| | 3 Wochen | | | 0 | 0 |

**Tabelle 6:**

| gemessene Größe | Zeitraum der Behandlung | Medium | Temperatur | Beispiel 1 | Beispiel 2 |
|---|---|---|---|---|---|
| Dichte Δ% | Startwert | | | 0 | 0 |
| | 1 Woche | | | 11,9 | 37,9 |
| | 3 Wochen | | | 5,8 | 33,9 |
| Gewicht Δ% | Startwert | | | 0 | 0 |
| | 1 Woche | | | -6,2 | -2,5 |
| | 3 Wochen | | | -2,2 | -5,8 |
| Volumen Δ% | Startwert | | | 0 | 0 |
| | 1 Woche | | | 9,1 | 29,4 |
| | 3 Wochen | | | 3,5 | 26,1 |
| Härte (ShA) | Startwert | | | 71 | 74 |
| | 1 Woche | | | 64 | 56 |
| | 3 Wochen | | | 67 | 57 |
| Zugfestigkeit (N/mm²) | Startwert | | | 6,6 | 7,5 |
| | 1 Woche | Diesel | RT | 4,3 | 3,4 |
| | 3 Wochen | | | 5,2 | 3,6 |
| Bruchdehnung (%) | Startwert | | | 299 | 305 |
| | 1 Woche | | | 230 | 171 |
| | 3 Wochen | | | 263 | 180 |
| 100% (MPa) | Startwert | | | 3,2 | 3,6 |
| | 1 Woche | | | 2,5 | 2,3 |
| | 3 Wochen | | | 2,7 | 2,4 |
| 200% (MPa) | Startwert | | | 4,7 | 5,5 |
| | 1 Woche | | | 3,9 | 0 |
| | 3 Wochen | | | 4,1 | 0 |
| 300% (MPa) | Startwert | | | 7 | 7,4 |
| | 1 Woche | | | 0 | 0 |
| | 3 Wochen | | | 0 | 0 |

**Tabelle 7:**

| gemessene Größe | Zeitraum der Behandlung | Medium | Temperatur | Beispiel 1 | Beispiel 2 |
|---|---|---|---|---|---|
| Dichte Δ% | Startwert | | | 0 | 0 |
| | 1 Woche | | | -0,7 | -0,1 |
| | 3 Wochen | | | -0,6 | 0,5 |
| | 6 Wochen | | | -1,5 | 1 |
| Gewicht Δ% | Startwert | | | 0 | 0 |
| | 1 Woche | | | 0,4 | 0 |
| | 3 Wochen | | | 0,5 | -0,4 |
| | 6 Wochen | | | 1,3 | -1,2 |
| Volumen Δ% | Startwert | | | 0 | 0 |
| | 1 Woche | | | -0,3 | -0,1 |
| | 3 Wochen | | | -0,1 | 0,2 |
| | 6 Wochen | Luft | 100°C | -0,2 | -0,2 |
| Härte (ShA) | Startwert | | | 71 | 74 |
| | 1 Woche | | | 72 | 75 |
| | 3 Wochen | | | 72 | 74 |
| | 6 Wochen | | | 77 | 75 |
| Zugfestigkeit (N/mm²) | Startwert | | | 6,6 | 7,5 |
| | 1 Woche | | | 6,5 | 7,8 |
| | 3 Wochen | | | 6 | 7,1 |
| | 6 Wochen | | | 6,1 | 7,1 |
| Bruchdehnung (%) | Startwert | | | 299 | 305 |
| | 1 Woche | | | 238 | 291 |
| | 3 Wochen | | | 184 | 277 |
| | 6 Wochen | | | 117 | 254 |

**Tabelle 8:**

| gemessene Größe | Zeitraum der Behandlung | Medium | Temperatur | Beispiel 1 | Beispiel 2 |
|---|---|---|---|---|---|
| 100% (MPa) | Startwert | Luft | 100°C | 3,2 | 3,6 |
| | 1 Woche | | | 3,6 | 4 |
| | 3 Wochen | | | 3,9 | 3,7 |
| | 6 Wochen | | | 5,5 | 4 |
| 200% (MPa) | Startwert | | | 4,7 | 5,5 |
| | 1 Woche | | | 5,6 | 6,1 |
| | 3 Wochen | | | 0 | 5,7 |
| | 6 Wochen | | | 0 | 6,1 |
| 300% (MPa) | Startwert | | | 7 | 7,4 |
| | 1 Woche | | | 0 | 0 |
| | 3 Wochen | | | 0 | 0 |
| | 6 Wochen | | | 0 | 0 |

### Beispiele 3 bis 6: Herstellung von Zusammensetzungen erfindungsgemäßer thermoplastischer Elastomere auf SBR- und NR-Basis :

Es wird gemäß der oben genannten Herstellungsvariante 3 eine thermoplastische Elastomerzusammensetzung mit den aus Tabellen 9 und 10 ersichtlichen Bestandteilen hergestellt. Für das Vermengen der eingesetzten Komponenten wird ein Doppelschneckenextruder verwendet.

Sowohl die TPE auf SBR-Basis als auch die TPE auf NR-Basis ergeben homogene Mischungen. Exemplarisch hierfür und für die Haftung auf Polyamid sind in Tabelle 11 die mechanischen Meßwerte und die Haftungswerte für die TPE auf SBR-Basis angegeben.

**Tabelle 9:**

| Z**usammensetzungen** | | | | | |
|---|---|---|---|---|---|
| | | **Beispiel 3** | **Beispiel 4** | **Beispiel 5** | **Beispiel 6** |
| Rohstoff | Komponente | | | | |
| Elastomer (SBR) | A1 | 100 | 100 | | |
| Elastomer (NR) | A2 | | | 100 | 100 |
| nicht-elastomeres Polyolefin (funktionalisiert mit MAH) | B | 36,7 | 45,4 | 26,7 | 33 |
| TPO (funktionalisiert mit MAH) | C1 | 18,3 | | 13,3 | |
| TPO (nicht funktionalisiert) | C2 | | 9,6 | | 7 |
| Vernetzungsmittel (Peroxid) | D | 12 | 12 | 12 | 12 |
| Covernetzer | E | 6 | 6 | 6 | 6 |
| Weichmacher (Weißöl) | F | 40 | 40 | 40 | 40 |
| Stabilisation, Hilfsstoffe und Farbe: | G | | | | |
| Additiv 1 | | 0,3 | 0,3 | 0,3 | 0,3 |
| Additiv 2 | | 0,1 | 0,1 | 0,1 | 0,1 |
| Additiv 3 | | 0,32 | 0,32 | 0,32 | 0,32 |
| Additiv 4 | | 0,1 | 0,1 | 0,1 | 0,1 |
| Füllstoff | H | 4 | 4 | 4 | 4 |

**Tabelle 10:**

| **Eingesetzte Rohstoffe** | | | |
|---|---|---|---|
| | | | |
| **Rohstoff** | **Komponente** | **Hersteller** | **Typ** |
| Elastomer (SBR) | A1 | synthos | Kralex SBR 1502 |
| Elastomer (NR) | A2 | | Natural Rubber SIR 20 |
| nicht-elastomeres Polyolefin | B | BYK Additives & Instruments | Scona TPPP 2112 GA |
| TPO (funktionalisiert) | C1 | BYK Additives & Instruments | BYK LP-T 23401 |
| TPO (nicht funktionalisiert) | C2 | Lyondell Basell | Hifax CA 10A |
| Vernetzungsmittel (Peroxid) | D | Pergan | Peroxan HXY 10 PS |
| Covernetzer | E | Kettlitz | PerTAC-GR |
| Weichmacher (Weißöl) | F | Shell | Shell Ondina 941 |
| Stabilisation, Hilfsstoffe und Farbe: | G | | |
| Additiv 1 | | BASF | Tinuvin 326 |
| Additiv 2 | | BASF | Chimasorb 944 FDL |
| Additiv 3 | | BASF | Irganox 1330 |
| Additiv 4 | | BASF | Irgafos 168 |
| Füllstoffe | H | Bayer | ZnO Aktiv |

**Tabelle 11:**

| **Mechanische Werte** | | | |
|---|---|---|---|
| | | **Beispiel 3** | **Beispiel 4** |
| **Wert** | **Einheit** | | |
| Dichte | g/cm³ | 0, 96 | 0, 96 |
| Härte | ShA | 80 | 80 |
| Zugfestigkeit | N/mm² | 5,5 | 5,4 |
| Bruchdehnung | % | 204 | 170 |
| 100% | MPa | 4,2 | 4,5 |
| Weiterreißfähigkeit | N/mm² | 17,3 | 15,9 |
| Druckverformungsrest bei 70°C/22h | % | 30 | 32 |
| Druckverformungsrest bei 100°C/22h | % | 34 | 33 |
| Druckverformungsrest bei 120°C/22h | % | 48 | 53 |
| Haftung auf PP | N/mm² | 0,7 | 1 |

| | | | |
|---|---|---|---|
| Die Werte für Dichte, Härte, Zugfestigkeit, Bruchdehnung, Dehnkraft(100%, 200%, 300%) und Weiterreißfähigkeit sind bei Raumtemperatur aufgenommen. | | | |

## Patentansprüche

1. Thermoplastische Elastomerzusammensetzung, die ein Elastomer, ein thermoplastisches Elastomer auf Polyolefin-Blockcopolymer-Basis (TPO), das mit einem Anhyhdrid einer organischen Carbonsäure funktionalisiert sein kann, und einen Thermoplast enthält, wobei der Thermoplast ein nicht-elastomeres Polyolefin ist, das mit einem Anhydrid einer organischen Carbonsäure funktionalisiert ist, und wobei das Elastomer ein Elastomer umfasst, das aus der Gruppe von Elastomeren ausgewählt ist, die aus Ethylen-Vinylacetat-Copolymer, Nitrilbutadien-Kautschuk, hydriertem Nitrilbutadien-Kautschuk, Butyl-Kautschuk, Naturkautschuk, Isopren-Kautschuk, Acrylat-Kautschuk, Ethylen-Acrylat-Kautschuk, Silikon-Kautschuk, Styrol-Butadien-Kautschuk, Chloropren-Kautschuk, Epichlorhydrin-Kautschuk, epoxidiertem Naturkautschuk und einer Mischung aus zwei oder mehreren der genannten Elastomere besteht, wobei das Elastomer während oder nach dem Vermengen mit dem Thermoplast vernetzt wird.

2. Thermoplastische Elastomerzusammensetzung nach Anspruch 1, worin das Elastomer ein Elastomer umfasst, das aus der Gruppe von Elastomeren ausgewählt ist, die aus Ethylen-Vinylacetat-Copolymer, Nitrilbutadien-Kautschuk und einer Mischung aus den genannten Elastomeren besteht.

3. Thermoplastische Elastomerzusammensetzung nach Anspruch 1 oder 2, worin die organische Carbonsäure eine organische Dicarbonsäure ist, vorzugsweise eine organische 1,2-Dicarbonsäure, ganz besonders bevorzugt Bernsteinsäure.

4. Thermoplastische Elastomerzusammensetzung nach einem der Ansprüche 1 bis 3, worin das Gewichtsverhältnis von Elastomer zu Thermoplast im Bereich von 100:15 bis 100:60 liegt.

5. Verwendung einer Mischung aus einem Elastomer und einem Vernetzungsmittel für das Elastomer zur Herstellung einer thermoplastischen Elastomerzusammensetzung gemäß einem der Ansprüche 1 bis 4, worin das Elastomer ein Elastomer umfasst, das aus der Gruppe von Elastomeren ausgewählt ist, die aus Ethylen-Vinylacetat-Copolymer, Nitrilbutadien-Kautschuk, hydriertem Nitrilbutadien-Kautschuk, Butyl-Kautschuk, Naturkautschuk, Isopren-Kautschuk, Acrylat-Kautschuk, Ethylen-Acrylat-Kautschuk, Silikon-Kautschuk, Styrol-Butadien-Kautschuk, Chloropren-Kautschuk, Brombutyl-Kautschuk, Epichlorhydrin-Kautschuk, epoxidiertem Naturkautschuk und einer Mischung aus zwei oder mehreren der genannten Elastomere besteht.

6. Verwendung eines nicht-elastomeren Polyolefins, das mit einem Anhydrid einer organischen Carbonsäure funktionalisiert ist, zur Herstellung einer thermoplastischen Elastomerzusammensetzung gemäß einem der Ansprüche 1 bis 4.

7. Verwendung einer thermoplastischen Elastomerzusammensetzung gemäß einem der Ansprüche 1 bis 4 zur Herstellung eines Verbundmaterials mit einem Polyamid.

8. Artikel, der eine thermoplastische Elastomerzusammensetzung gemäß einem der Ansprüche 1 bis 4 und ein Polyamid umfasst.

9. Verwendung einer thermoplastischen Elastomerzusammensetzung gemäß einem der Ansprüche 1 bis 4 zur Herstellung von Bauteilen oder Formkörpern im Automobilinnenbereich sowie unter der Motorhaube ("under the hood"), d.h. im Motorraum von Fahrzeugen, zur Herstellung von Industriegeräten, Industriewerkzeugen, Badarmaturen, Haushaltsgeräten, Geräten der Unterhaltungselektronik, Sportartikeln, medizinischen Verbrauchsartikeln und Geräten, Behältern für Hygieneartikel und Kosmetika und allgemein Dichtungsmaterialien.

10. Verfahren zur Herstellung einer thermoplastischen Elastomerzusammensetzung gemäß einem der Ansprüche 1 bis 4, worin ein Elastomer mit einem thermoplastischen Elastomer auf Polyolefin-Blockcopolymer-Basis (TPO), das mit einem Anhyhdrid einer organischen Carbonsäure funktionalisiert sein kann, und einem Thermoplast vermischt wird, wobei der Thermoplast ein nicht-elastomeres Polyolefin ist, das mit einem Anhydrid einer organischen Carbonsäure funktionalisiert ist, und wobei das Elastomer ein Elastomer umfasst, das aus der Gruppe von Elastomeren ausgewählt ist, die aus Ethylen-Vinylacetat-Copolymer, Nitrilbutadien-Kautschuk, hydriertem Nitrilbutadien-Kautschuk, Butyl-Kautschuk, Naturkautschuk, Isopren-Kautschuk, Acrylat-Kautschuk, Ethylen-Acrylat-Kautschuk, Silikon-Kautschuk, Styrol-Butadien-Kautschuk, Chloropren-Kautschuk, Brombutyl-Kautschuk, Epichlorhydrin-Kautschuk, epoxidiertem Naturkautschuk und einer Mischung aus zwei oder mehreren der genannten Elastomere besteht, wobei das Elastomer während oder nach dem Vermengen mit dem Thermoplast vernetzt wird.

11. Verfahren nach Anspruch 10, worin das Elastomer mit dem Thermoplast in einem Extruder, einem Innenmischer oder einem Kneter, vorzugsweise in einem Doppelschneckenextruder, vermischt (mastiziert) wird.

12. Verfahren nach Anspruch 10 oder 11, worin in einem ersten Schritt das mittels Temperatureinwirkung erweichte Elastomer vor dem Vermischen mit dem Thermoplast zusammen mit einem Vernetzungsmittel gemischt (mastiziert) wird.

13. Verfahren nach Anspruch 10 bis 12, worin der erste Schritt in einem Temperaturbereich von 50 °C bis 120 °C durchgeführt wird.

## Claims

1. Thermoplastic elastomer composition which contains an elastomer, a thermoplastic elastomer based on polyolefin block copolymers (TPO), which can be functionalized with an anhydride of an organic carboxylic acid, and a thermoplastic, wherein the thermoplastic is a non-elastomeric polyolefin, which is functionalized with an anhydride of an organic carboxylic acid, and wherein the elastomer comprises an elastomer selected from the group of elastomers consisting of ethylene-vinyl acetate copolymer, nitrile butadiene rubber, hydrogenated nitrile butadiene rubber, butyl rubber, natural rubber, isoprene rubber, acrylate rubber, ethylene acrylate rubber, silicone rubber, styrene-butadiene rubber, chloroprene rubber, epichlorohydrin rubber, epoxidized natural rubber and a mixture of two or more of the said elastomers, wherein the elastomer is crosslinked during or after the blending with the thermoplastic.

2. Thermoplastic elastomer composition according to claim 1, wherein the elastomer comprises an elastomer selected from the group of elastomers consisting of ethylene-vinyl acetate copolymer, nitrile butadiene rubber and a mixture of the said elastomers.

3. Thermoplastic elastomer composition according to claim 1 or 2, wherein the organic carboxylic acid is an organic dicarboxylic acid, preferably an organic 1,2-dicarboxylic acid, quite particularly preferably succinic acid.

4. Thermoplastic elastomer composition according to one of claims 1 to 3, wherein the weight ratio of the elastomer to the thermoplastic lies in the range of from 100:15 to 100:60.

5. Use of a mixture of an elastomer and a crosslinking agent for the elastomer to produce a thermoplastic elastomer composition according to one of claims 1 to 4, wherein the elastomer comprises an elastomer selected from the group of elastomers consisting of ethylene-vinyl acetate copolymer, nitrile butadiene rubber, hydrogenated nitrile butadiene rubber, butyl rubber, natural rubber, isoprene rubber, acrylate rubber, ethylene acrylate rubber, silicone rubber, styrene-butadiene rubber, chloroprene rubber, bromobutyl rubber, epichlorohydrin rubber, epoxidized natural rubber and a mixture of two or more of the said elastomers.

6. Use of a non-elastomeric polyolefin, which is functionalized with an anhydride of an organic carboxylic acid, to produce a thermoplastic elastomer composition according to one of claims 1 to 4.

7. Use of a thermoplastic elastomer composition according to one of claims 1 to 4 to produce a composite material with a polyamide.

8. Article which comprises a thermoplastic elastomer composition according to one of claims 1 to 4 and a polyamide.

9. Use of a thermoplastic elastomer composition according to one of claims 1 to 4 to produce components or shaped bodies in automobile interiors as well as under the hood, i.e. in the vehicle's engine compartment, to produce industrial devices, industrial tools, bathroom fittings, household appliances, consumer electronics, sporting goods, medical consumables and devices, containers for hygiene products and cosmetics and sealing materials in general.

10. Process for producing a thermoplastic elastomer composition according to one of claims 1 to 4, wherein an elastomer is mixed with a thermoplastic elastomer based on polyolefin block copolymers (TPO), which can be functionalized with an anhydride of an organic carboxylic acid, and a thermoplastic, wherein the thermoplastic is a non-elastomeric polyolefin, which is functionalized with an anhydride of an organic carboxylic acid, and wherein the elastomer comprises an elastomer selected from the group of elastomers consisting of ethylene-vinyl acetate copolymer, nitrile butadiene rubber, hydrogenated nitrile butadiene rubber, butyl rubber, natural rubber, isoprene rubber, acrylate rubber, ethylene acrylate rubber, silicone rubber, styrene-butadiene rubber, chloroprene rubber, bromobutyl rubber, epichlorohydrin rubber, epoxidized natural rubber and a mixture of two or more of the said elastomers, wherein the elastomer is crosslinked during or after the blending with the thermoplastic.

11. Process according to claim 10, wherein the elastomer is mixed (masticated) with the thermoplastic in an extruder, an internal mixer or a kneader, preferably in a twin-screw extruder.

12. Process according to claim 10 or 11, wherein in a first step the elastomer softened by the effect of temperature is mixed (masticated) together with a crosslinking agent before the mixing with the thermoplastic.

13. Process according to claim 10 to 12, wherein the first step is carried out in a temperature range of from 50°C to 120°C.

## Revendications

1. Composition d'élastomères thermoplastique, qui contient un élastomère, un élastomère thermoplastique à base de copolymère séquencé de polyoléfine (TPO), qui peut être fonctionnalisé avec un anhydride d'un acide carboxylique organique, et un thermoplaste, où le thermoplaste est une polyoléfine non élastomère qui est fonctionnalisée avec un anhydride d'un acide carboxylique organique, et où l'élastomère comprend un élastomère qui est choisi dans le groupe d'élastomères qui consiste en copolymère éthylène-acétate de vinyle, caoutchouc nitrile-butadiène, caoutchouc nitrile-butadiène hydrogéné, caoutchouc butyle, caoutchouc naturel, caoutchouc d'isoprène, caoutchouc d'acrylate, caoutchouc éthylène-acrylate, caoutchouc de silicone, caoutchouc styrène-butadiène, caoutchouc de chloroprène, caoutchouc d'épichlorhydrine, caoutchouc naturel époxydé et un mélange de deux ou plus des élastomères cités, où l'élastomère est réticulé pendant ou après le mélange avec le thermoplaste.

2. Composition d'élastomères thermoplastique selon la revendication 1, où l'élastomère comprend un élastomère qui est choisi dans le groupe d'élastomères qui consiste en copolymère éthylène-acétate de vinyle, caoutchouc de nitrile-butadiène et un mélange des élastomères cités.

3. Composition d'élastomères thermoplastique selon la revendication 1 ou 2, où l'acide carboxylique organique est un acide dicarboxylique organique, de préférence un acide 1,2-dicarboxylique organique, de manière particulièrement préférée l'acide succinique.

4. Composition d'élastomères thermoplastique selon l'une des revendications 1 à 3, où le rapport en poids de l'élastomère au thermoplaste est situé dans le domaine de 100:15 à 100:60.

5. Utilisation d'un mélange d'un élastomère et d'un agent de réticulation pour l'élastomère pour la production d'une composition d'élastomères thermoplastique selon l'une des revendications 1 à 4, où l'élastomère comprend un élastomère qui est choisi dans le groupe d'élastomères qui consiste en copolymère éthylène-acétate de vinyle, caoutchouc nitrile-butadiène, caoutchouc nitrile-butadiène hydrogéné, caoutchouc butyle, caoutchouc naturel, caoutchouc d'isoprène, caoutchouc d'acrylate, caoutchouc éthylène-acrylate, caoutchouc de silicone, caoutchouc styrène-butadiène, caoutchouc de chloroprène, caoutchouc de bromobutyle, caoutchouc d'épichlorhydrine, caoutchouc naturel époxydé et un mélange de deux ou plus des élastomères cités.

6. Utilisation d'une polyoléfine non élastomère qui est fonctionnalisée avec un anhydride d'un acide carboxylique organique, pour la production d'une composition d'élastomères thermoplastique selon l'une des revendications 1 à 4.

7. Utilisation d'une composition d'élastomères thermoplastique selon l'une des revendications 1 à 4 pour la production d'un matériau composite avec un polyamide.

8. Article qui comprend une composition d'élastomères thermoplastique selon l'une des revendications 1 à 4 et un polyamide.

9. Utilisation d'une composition d'élastomères thermoplastique selon l'une des revendications 1 à 4 pour la production d'éléments de construction ou de pièces moulées dans le domaine à l'intérieur des automobiles ainsi que sous le capot du moteur (« under the hood »), c'est-à-dire dans le compartiment du moteur de véhicules automobiles, pour la production d'appareils pour l'industrie, d'outils pour l'industrie, d'accessoires de bain, d'appareils ménagers, d'appareils de l'électronique de loisirs, d'articles de sport, d'articles consommables et d'appareils médicaux, de récipients pour articles d'hygiène et cosmétiques et d'une manière générale de matériaux d'étanchéité.

10. Procédé pour la production d'une composition d'élastomères thermoplastique selon l'une des revendications 1 à 4, où un élastomère est mélangé avec un élastomère thermoplastique à base de copolymère séquencé de polyoléfine (TPO), qui peut être fonctionnalisé avec un anhydride d'un acide carboxylique organique, et un thermoplaste, où le thermoplaste est une polyoléfine non élastomère qui est fonctionnalisée avec un anhydride d'un acide carboxylique organique, et où l'élastomère comprend un élastomère qui est choisi dans le groupe d'élastomères qui consiste en copolymère éthylène-acétate de vinyle, caoutchouc nitrile-butadiène, caoutchouc nitrile-butadiène hydrogéné, caoutchouc butyle, caoutchouc naturel, caoutchouc d'isoprène, caoutchouc d'acrylate, caoutchouc éthylène-acrylate, caoutchouc de silicone, caoutchouc styrène-butadiène, caoutchouc de chloroprène, caoutchouc de bromobutyle, caoutchouc d'épichlorhydrine, caoutchouc naturel époxydé et un mélange de deux ou plus des élastomères cités, où l'élastomère est réticulé pendant ou après le mélange avec le thermoplaste.

11. Procédé selon la revendication 10, où l'élastomère est mélangé (mastiqué) avec le thermoplaste dans une extrudeuse, un mélangeur interne ou un malaxeur, de préférence dans une extrudeuse à deux vis.

12. Procédé selon la revendication 10 ou 11, où dans une première étape l'élastomère ramolli sous l'effet de la température est mélangé (mastiqué) avec un agent de réticulation avant le mélange avec le thermoplaste.

13. Procédé selon les revendications 10 à 12, où la première étape est accomplie dans un domaine de température de 50°C à 120°C.
